# EUROPEAN PATENT SPECIFICATION

(11) **EP 3 832 110 B1**
(45) Date of publication and mention of the grant of the patent: **19.08.2026**
(21) Application number: 20206482.0
(22) Date of filing: 09.11.2020
(51) Int. Cl.: F02C 7/36, F16H 57/08, F16H 1/28

(54) **AIRCRAFT ENGINE**
FLUGZEUGTRIEBWERK
MOTEUR D'AÉRONEF

(30) Priority: 05.12.2019 GB 201917776
(43) Date of publication of application: 09.06.2021
(60) Divisional application: 26191408.9
(73) Proprietor: Rolls-Royce plc, London N1 9FX (GB)
(72) Inventor: Spruce, Mark, Derby, Derbyshire DE24 8BJ (GB)
(74) Representative: Rolls-Royce plc

(56) References cited:
- US-A1- 2013 336 791
- US-A1- 2015 377 143
- US-A1- 2017 342 858
- US-A1- 2019 316 488
- US-A1- 2019 345 876
- US-B1- 10 436 035

## Description

The present invention relates to gas turbine engines for aircrafts, the engines comprising gearboxes in the form of epicyclic gearboxes comprising a planet carrier having stiffnesses meeting specified criteria.

US 2013/0336791 relates to a gas turbine engine in which a very high speed fan drive turbine drives a fan drive gear system. The gas turbine engine includes a flex mount for the fan drive gear system.

US 2017/0342858 relates to a gas turbine engine having, inter alia, a fan support that supports a fan shaft and a gear system connected to the fan shaft. The gas turbine engine is said to have a ring gear transverse stiffness that is less than 20% of a gear mesh stiffness, and a journal bearing transverse stiffness that is less than or equal to a gear mesh transverse stiffnes:

US 2015/377143 A relates to a gas turbine engine.

According to the present invention there is provided a gas turbine engine for an aircraft, the engine comprising an engine core comprising a turbine, a compressor, and a core shaft connecting the turbine to the compressor; a fan located upstream of the engine core, the fan comprising a plurality of fan blades; and a gearbox arranged to receive an input from the core shaft and to output drive to the fan so as to drive the fan at a lower rotational speed than the core shaft. The gearbox is an epicyclic gearbox comprising a sun gear, a plurality of planet gears, a ring gear, and a planet carrier on which the planet gears are mounted. The radial bending stiffness of the planet carrier is in the range from 2.0x10⁹ to 1.5x10¹¹ N/m, and/or the tilt stiffness of the planet carrier is in the range from 1.3 x10⁹ to 1.2x10¹¹ Nm/radian.

Advantageous embodiments of the invention are laid down in the dependent claims.

According to an advantageous embodiment, the fan may have a fan diameter in the range from 240 to 280 cm, and the radial bending stiffness of the planet carrier is less than or equal to 5x10¹⁰ N/m.

According to an advantageous embodiment, the fan has a fan diameter in the range from 240 to 280 cm. In such embodiments, the tilt stiffness of the planet carrier may be greater than or equal to 2.2 x10⁹ Nm/radian.

According to an advantageous embodiment, the fan has a fan diameter in the range from 330 to 380 cm. In such embodiments, the tilt stiffness of the planet carrier may be greater than or equal to 2.3 x10⁹ Nm/radian.

The inventor has discovered that maintaining one or more stiffnesses of the carrier in the ranges claimed herein may allow for compensation in gear misalignment (for example due to variation within manufacturing tolerances and/or wear during operation) whilst avoiding significant distortion of the gearbox. The compensation may result in reduced variability in the loading across and/or between gears (e.g. a more even load share). In turn this may allow the mass of the gears to be reduced whilst still retaining the required life and efficiency for an aircraft application One or more stiffnesses of the carrier may therefore be selected to be relatively high to reduce or avoid deleterious wind-up or distortion of the carrier and/or misalignment of the gears carried by the carrier. It may be beneficial for the one or more of the stiffnesses to remain low enough to allow sufficient flexibility to correct for any minor gear misalignment due to manufacturing issues. The inventor discovered that in some arrangements maintaining one or more of the stiffnesses within the corresponding specified ranges provides a beneficial combination of these effects. It has been found that maintaining an even distribution of load between the planet gears is desirable to improve gearbox lifetime and reliability. The inventor discovered that maintaining one or more of the carrier stiffnesses within the applicable specified range allows sufficient flexibility of the carrier to facilitate obtaining a more even load share (i.e. an improved load-share factor) by allowing the planet gears to move relative to each other and/or relative to the carrier. In some arrangements, if the carrier stiffness were too high, load-share factor may deteriorate due to an inability to accommodate any pre-existing misalignment, or any misalignment arising during use.

The carrier design of various embodiments, with one or more stiffnesses as defined, may therefore facilitate obtaining and/or maintaining correct gear alignment.

According to an advantageous embodiment, the torsional stiffness of the planet carrier is greater than or equal to 1.60x10⁸ Nm/rad, and optionally in the range from 1.60x10⁸ to 1.00x10¹¹ Nm/rad, or from 2.7x10⁸ to 1x10¹⁰ Nm/rad.

According to an advantageous embodiment, a pitch circle diameter of pins on which the planet gears are mounted is in the range from 0.38 to 0.65 m, and optionally may be equal to 0.4 m or 0.55 m.

According to an advantageous embodiment, the turbine is a first turbine, the compressor is a first compressor, and the core shaft is a first core shaft. The engine core further comprises a second turbine, a second compressor, and a second core shaft connecting the second turbine to the second compressor. The second turbine, second compressor, and second core shaft are arranged to rotate at a higher rotational speed than the first core shaft.

According to an advantageous embodiment, the planet carrier comprises a forward plate and a rearward plate and pins extending therebetween. Each pin is arranged to have a planet gear mounted thereon. The planet carrier may further comprise lugs extending between the forward and rearward plates, the lugs being arranged to pass between adjacent planet gears.

According to an advantageous embodiment, the gearbox comprises an odd number of planet gears, and optionally may comprise 3, 5 or 7 planet gears.

According to an advantageous embodiment, the fan has a fan diameter greater than 240 cm and less than or equal to 380 cm, and optionally greater than 300 cm and less than or equal to 380 cm.

According to an advantageous embodiment, a gear ratio of the gearbox is in the range from 3.2 to 4.5, and optionally from 3.3 to 4.0.

Embodiments will now be described by way of example only, with reference to the Figures, in which:
Figure 1 is a sectional side view of a gas turbine engine;
Figure 2 is a close up sectional side view of an upstream portion of a gas turbine engine;
Figure 3 is a partially cut-away view of a gearbox for a gas turbine engine;
Figure 4 is a schematic diagram illustrating automatic load-share adjustments within a gearbox;
Figure 5 is a schematic diagram illustrating radial bending stiffness of a cantilevered beam;
Figure 6 is a schematic diagram illustrating tilt stiffness of a cantilevered beam;
Figure 7 is a schematic diagram illustrating torsional stiffness of a cantilevered beam;
Figure 8 is a schematic diagram illustrating radial bending stiffness of a cantilevered beam, with its moveable end slidably mounted on a plane;
Figure 9 is a schematic diagram illustrating radial bending stiffness of the carrier;
Figure 10 is a schematic diagram illustrating tilt stiffness of the carrier, and more specifically the determination of an effective linear tilt stiffness for the carrier;
Figure 11 is a schematic diagram illustrating tilt stiffness of the carrier;
Figure 12 is a schematic diagram illustrating torsional stiffness of the carrier in side view;
Figure 13 is a schematic diagram illustrating torsional stiffness of an alternative carrier in front view;
Figure 14 is a schematic diagram illustrating torsional stiffness of the carrier of Figure 13;
Figure 15 is a schematic diagram illustrating a front view of a carrier comprising lugs;
Figure 16 is a schematic diagram illustrating radial bending stiffness of unjointed pins;
Figure 17 is a schematic diagram illustrating radial bending stiffness of jointed pins;
Figure 18 is a schematic diagram illustrating tilt stiffness of pins;
Figure 19 is a schematic diagram illustrating the core shaft, and in particular the gearbox input shaft;
Figure 20 is a schematic diagram illustrating the torsional stiffness of the gearbox input shaft;
Figure 21 includes side and radial views of the gearbox support illustrating torsional stiffness of the gearbox support;
Figure 22 is a schematic diagram illustrating a portion of an engine with a star gearbox;
Figure 23 is a schematic diagram illustrating connection of the fan shaft to a star gearbox;
Figure 24 is a schematic diagram illustrating connection of the fan shaft to a planetary gearbox;
Figure 25 is a schematic diagram illustrating fan shaft torsional stiffness in an engine with a star gearbox;
Figure 26 is a graph of displacement against load, illustrating an elastic region within which stiffnesses of components may be determined; and
Figure 27 illustrates a method.

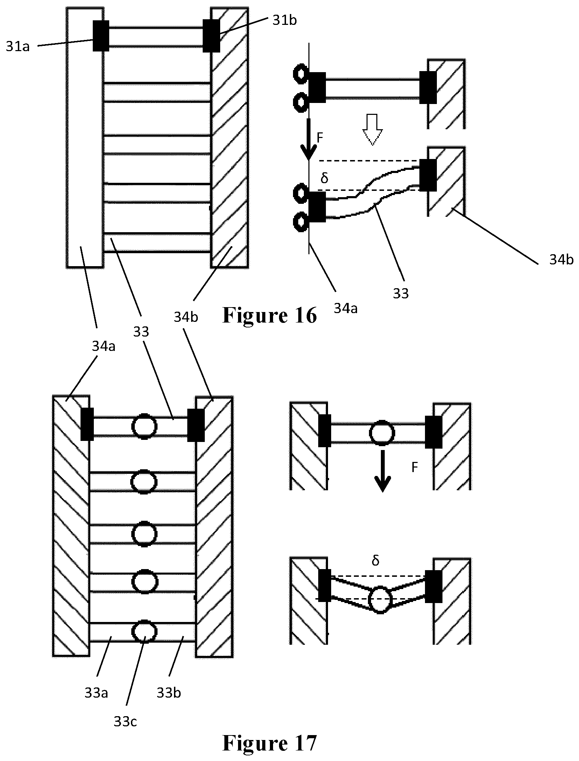

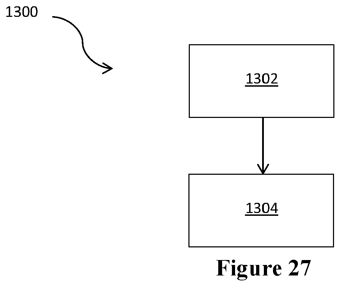

Figures 16 to 25 describe features that are not directly the subject of claims, but embodiments of the invention may include features shown and described in relation to these Figures. The method shown in Figure 27 is not claimed.

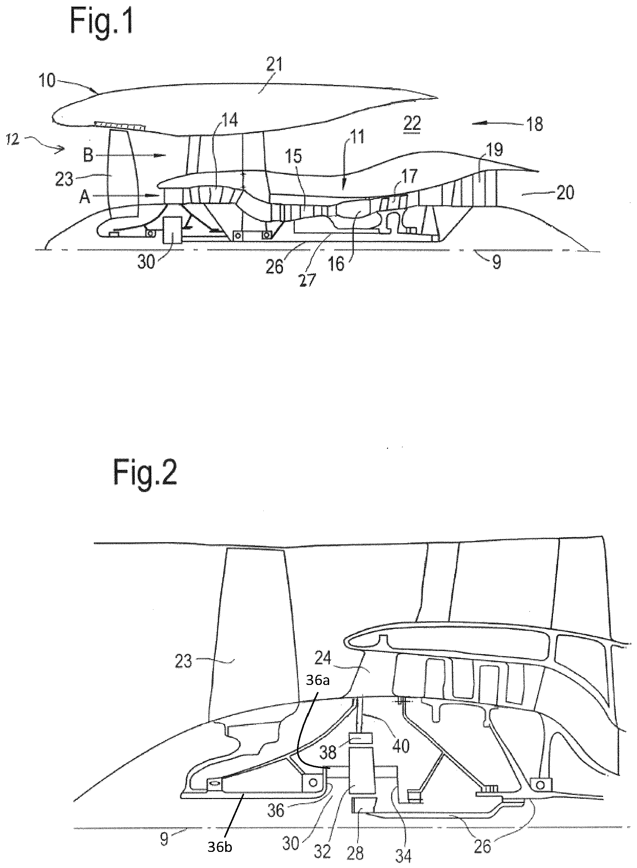

Figure 1 illustrates a gas turbine engine 10 having a principal rotational axis 9. The engine 10 comprises an air intake 12 and a propulsive fan 23 that generates two airflows: a core airflow A and a bypass airflow B. The gas turbine engine 10 comprises a core 11 that receives the core airflow A. The engine core 11 comprises, in axial flow series, a low pressure compressor 14, a high-pressure compressor 15, combustion equipment 16, a high-pressure turbine 17, a low pressure turbine 19 and a core exhaust nozzle 20. A nacelle 21 surrounds the gas turbine engine 10 and defines a bypass duct 22 and a bypass exhaust nozzle 18. The bypass airflow B flows through the bypass duct 22. The fan 23 is attached to and driven by the low pressure turbine 19 via a shaft 26 and an epicyclic gearbox 30.

In use, the core airflow A is accelerated and compressed by the low pressure compressor 14 and directed into the high pressure compressor 15 where further compression takes place. The compressed air exhausted from the high pressure compressor 15 is directed into the combustion equipment 16 where it is mixed with fuel and the mixture is combusted. The resultant hot combustion products then expand through, and thereby drive, the high pressure and low pressure turbines 17, 19 before being exhausted through the nozzle 20 to provide some propulsive thrust. The high pressure turbine 17 drives the high pressure compressor 15 by a suitable interconnecting shaft 27. The fan 23 generally provides the majority of the propulsive thrust. The epicyclic gearbox 30 is a reduction gearbox.

An exemplary arrangement for a geared fan gas turbine engine 10 is shown in Figure 2. The low pressure turbine 19 (see Figure 1) drives the shaft 26, which is coupled to a sun wheel, or sun gear, 28 of the epicyclic gear arrangement 30. Radially outwardly of the sun gear 28 and intermeshing therewith is a plurality of planet gears 32 that are coupled together by a planet carrier 34. The planet carrier 34 constrains the planet gears 32 to precess around the sun gear 28 in synchronicity whilst enabling each planet gear 32 to rotate about its own axis. The planet carrier 34 is coupled via linkages 36 to the fan 23 in order to drive its rotation about the engine axis 9. Radially outwardly of the planet gears 32 and intermeshing therewith is an annulus or ring gear 38 that is coupled, via linkages 40, to a stationary supporting structure 24.

The linkages 36 may be referred to as a fan shaft 36, the fan shaft 36 optionally comprising two or more shaft portions coupled together. For example, the fan shaft 36 may comprise a gearbox output shaft portion 36a extending from the gearbox 30 and a fan portion 36b extending between the gearbox output shaft portion and the fan 23. In the embodiment shown in Figures 1 and 2, the gearbox 30 is a planetary gearbox and the gearbox output shaft portion 36a is connected to the planet carrier 34 - it may therefore be referred to as a carrier output shaft 36a. In star gearboxes 30, the gearbox output shaft portion 36a may be connected to the ring gear 38 - it may therefore be referred to as a ring output shaft 36a. In the embodiment shown in Figures 1 and 2, the fan portion 36b of the fan shaft 36 connects the gearbox output shaft portion 36a to the fan 23. The output of the gearbox 30 is therefore transferred to the fan 23, to rotate the fan, via the fan shaft 36. In alternative embodiments, the fan shaft 36 may comprise a single component, or more than two components. Unless otherwise indicated or apparent to the skilled person, anything described with respect to an engine 10 with a star gearbox 30 may equally be applied to an engine with a planetary gearbox 30, and *vice versa.*

Note that the terms "low pressure turbine" and "low pressure compressor" as used herein may be taken to mean the lowest pressure turbine stages and lowest pressure compressor stages (i.e. not including the fan 23) respectively and/or the turbine and compressor stages that are connected together by the interconnecting shaft 26 with the lowest rotational speed in the engine (i.e. not including the gearbox output shaft that drives the fan 23). In some literature, the "low pressure turbine" and "low pressure compressor" referred to herein may alternatively be known as the "intermediate pressure turbine" and "intermediate pressure compressor". Where such alternative nomenclature is used, the fan 23 may be referred to as a first, or lowest pressure, compression stage.

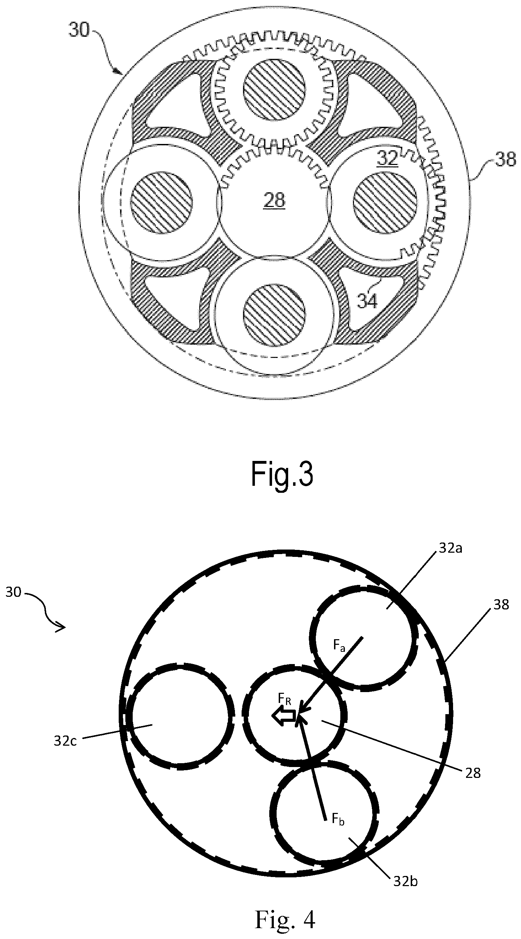

The epicyclic gearbox 30 is shown by way of example in greater detail in Figure 3. Each of the sun gear 28, planet gears 32 and ring gear 38 comprise teeth about their periphery to intermesh with the other gears. However, for clarity only exemplary portions of the teeth are illustrated in Figure 3. There are four planet gears 32 illustrated, although it will be apparent to the skilled reader that more or fewer planet gears 32 may be provided within the scope of the claimed invention. Practical applications of a planetary epicyclic gearbox 30 generally comprise at least three planet gears 32.

The epicyclic gearbox 30 illustrated by way of example in Figures 2 and 3 is of the planetary type, in that the planet carrier 34 is coupled to an output shaft via linkages 36, with the ring gear 38 fixed. However, any other suitable type of epicyclic gearbox 30 may be used. By way of further example, the epicyclic gearbox 30 may be a star arrangement, in which the planet carrier 34 is held fixed, with the ring (or annulus) gear 38 allowed to rotate. In such an arrangement the fan 23 is driven by the ring gear 38. By way of further alternative example, the gearbox 30 may be a differential gearbox in which the ring gear 38 and the planet carrier 34 are both allowed to rotate.

It will be appreciated that the arrangement shown in Figures 2 and 3 is by way of example only, and various alternatives are within the scope of the present disclosure. Purely by way of example, any suitable arrangement may be used for locating the gearbox 30 in the engine 10 and/or for connecting the gearbox 30 to the engine 10. By way of further example, the connections (such as the linkages 36, 40 in the Figure 2 example) between the gearbox 30 and other parts of the engine 10 (such as the input shaft 26, the output shaft and the fixed structure 24) may have any desired degree of stiffness or flexibility. By way of further example, any suitable arrangement of the bearings between rotating and stationary parts of the engine (for example between the input and output shafts from the gearbox and the fixed structures, such as the gearbox casing) may be used, and the disclosure is not limited to the exemplary arrangement of Figure 2. For example, where the gearbox 30 has a star arrangement (described above), the skilled person would readily understand that the arrangement of output and support linkages and bearing locations would typically be different to that shown by way of example in Figure 2.

Accordingly, the present disclosure extends to a gas turbine engine having any arrangement of gearbox styles (for example star or planetary), support structures, input and output shaft arrangement, and bearing locations.

Optionally, the gearbox may drive additional and/or alternative components (e.g. the intermediate pressure compressor and/or a booster compressor).

Other gas turbine engines to which the present disclosure may be applied may have alternative configurations. For example, such engines may have an alternative number of compressors and/or turbines and/or an alternative number of interconnecting shafts. By way of further example, the gas turbine engine shown in Figure 1 has a split flow nozzle 18, 20 meaning that the flow through the bypass duct 22 has its own nozzle 18 that is separate to and radially outside the core engine nozzle 20. However, this is not limiting, and any aspect of the present disclosure may also apply to engines in which the flow through the bypass duct 22 and the flow through the core 11 are mixed, or combined, before (or upstream of) a single nozzle, which may be referred to as a mixed flow nozzle. One or both nozzles (whether mixed or split flow) may have a fixed or variable area. Whilst the described example relates to a turbofan engine, the disclosure may apply, for example, to any type of gas turbine engine, such as an open rotor (in which the fan stage is not surrounded by a nacelle) or turboprop engine, for example.

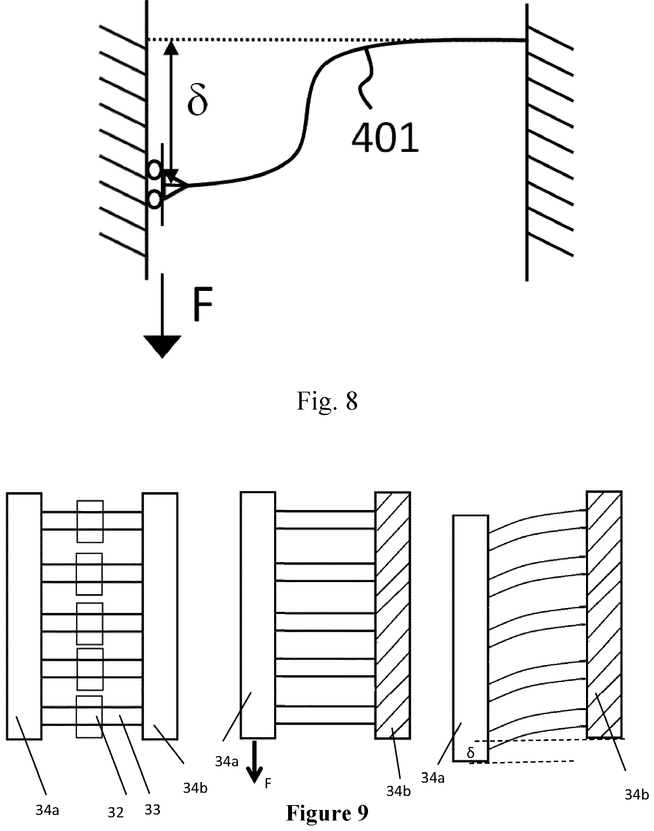

The geometry of the gas turbine engine 10, and components thereof, is defined by a conventional axis system, comprising an axial direction (which is aligned with the rotational axis 9), a radial direction (in the bottom-to-top direction in Figure 1), and a circumferential direction (perpendicular to the page in the Figure 1 view). The axial, radial and circumferential directions are mutually perpendicular. In the described arrangement, the carrier 34 comprises two plates 34a, 34b; in particular a forward plate 34a and a rearward plate 34b (see, for example, Figure 9). Each plate 34a, 34b extends in a radial plane, with the forward plate 34a lying further forward in the engine 10 / closer to the fan 23 than the rearward plate 34b.

The carrier 34 may take any suitable form. For example, the carrier may or may not be symmetric about its axial mid-point. Purely by way example, in a described arrangement, the carrier 34 is not symmetric about its axial mid-point, but rather the rearward plate 34b is stiffer than the forward plate 34a (for example by 50 to 300%) to compensate for an asymmetric torque variation across the gearbox 30. In some embodiments, no forward plate 34a may be provided, or only a smaller forward plate 34a. In some embodiments, the plates 34a, 34b of the carrier 34 may have equal stiffnesses (for example, in various planetary gearbox arrangements; stiffer rearward plates 34b may be preferred in some star gearbox arrangements).

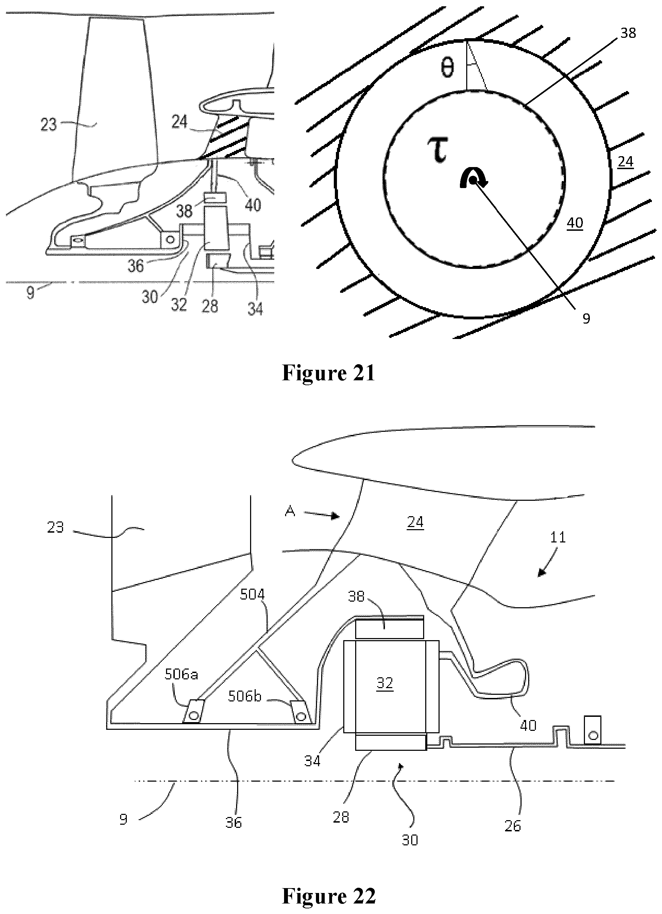

A plurality of pins 33 extend across the carrier 34 (between the forward and rearward plates 34a,b in the arrangement being described), as shown, for example, in Figures 9 to 18. The pins 33 form a part of the carrier 34. Each pin 33 has a planet gear 32 mounted thereon. As referred to herein, reference to a planet gear 32 includes the gear 32 mounted on the pin 33 regardless of whether the gearbox is a so-called "star" arrangement (such as that shown in Figure 22), or a "planetary gearbox" (such as that shown in Figure 2).

The carrier stiffness in a region at each of the front and rear ends of each pin 33 may be arranged to be relatively low in the embodiments being described, to facilitate a more even load distribution; i.e. to improve load-share factor. This may be described as soft mountings for each pin 33. The soft mountings 33a, 33b may allow some movement of the pins 33 relative to each other, and relative to the carrier plates 34a, 34b, so allowing differences between planet gears 34, or other manufacturing defects, to be accommodated without a significant difference in load between different planet gears 34.

Such soft mountings 34a, 34b may be provided by a portion of the pin 33, by a separate component, and/or by a portion of the respective carrier plate 34a, 34b, in various embodiments. The soft mountings 34a, 34b may be designed to accommodate movements to address one or more of carrier bearing location accuracy and clearance, planet pin runout of bearing surface to mounting feature(s), planet gear teeth to bearing runout, planet gear teeth spacing and thickness variation/manufacturing tolerances, sun gear teeth spacing and thickness variation/manufacturing tolerances, and/or gearbox input shaft mainline bearing location accuracy and clearance, or the likes. For example, in various embodiments the soft mountings 34a, 34b may be arranged to allow around 500 µm of pin movement.

Pin size, design and/or material may be adjusted to provide appropriate stiffnesses to the carrier 34.

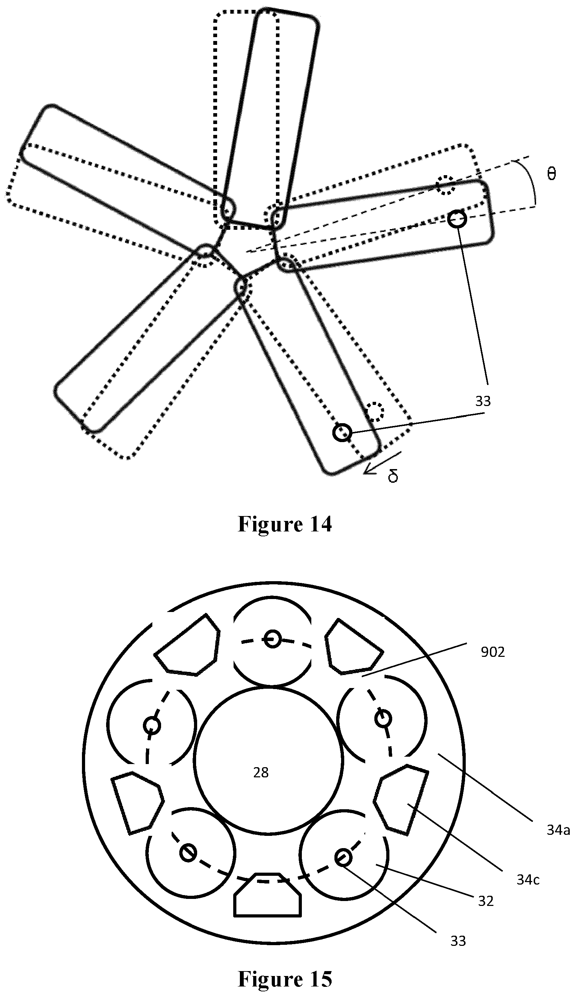

In some arrangements, such as that shown in Figure 15, lugs 34c may be provided, extending between the carrier plates 34a, 34b and past the planet gears 32. The presence/absence of lugs 34c, and the number, shape, and/or material(s) of the lug(s) may vary in various embodiments, and may be adjusted to provide appropriate stiffnesses to the carrier 34.

Use of flexibility within the gearbox 30 to improve load-share is illustrated schematically in Figure 4, which shows a planetary gearbox 30 with three planet gears 32a, 32b, 32c (misalignments are exaggerated in this Figure for clarity of explanation). In this example, the sun gear 28 is slightly off-centre with respect to the ring gear 38, and in particular is closer to two planet gears 32a and 32b than it is to the third planet gear 32c. In the schematic example shown, there is no contact between the third planet gear 32c and the sun gear 28, leaving the other two planet gears 32a, 32b to take 50% of the load each, rather than one third each as would be expected for an even load distribution. This relatively extreme example is provided for ease of reference only - in reality, situations in which contact with one planet gear 32c is reduced, but not completely eliminated, would be more likely, for example leading to a percentage load-share of 20:40:40, 26:37:37, or 31:34:34 or the likes rather than the ideal even load share fraction of 1/3: 1/3: 1/3 (i.e. 33:33:33, as a percentage load share, rounded to the nearest integer).

In the example shown in Figure 4, each of the two planet gears 32a, 32b in contact with the sun gear 28 exerts a force Fₐ, F_{b} on the sun gear 28. The resultant force, F_{R}, on the sun gear 28 pushes the sun gear 28 towards the third planet gear 32c, so re-establishing contact and making the load-share between planets 32 more even. A soft mounting of the sun gear 28/flexibility in the core input shaft 26 facilitates this re-balancing. Such a soft mounting of the sun gear 28 may be designed to accommodate movements to address one or more of carrier bearing location accuracy and clearance, planet and/or sun gear teeth spacing and thickness variation/manufacturing tolerances, and/or gearbox input shaft mainline bearing location accuracy and clearance, or the likes. For example, in various embodiments such soft mountings may be arranged to allow around 1000 µm of sun gear movement.

The skilled person would appreciate that a similar effect would apply if one of the planet gears 32 were closer to the sun gear 28 than the others; pushing the relevant planet gear 32 back towards the ring gear 38, or if one of the planet gears 32 were larger or smaller than the others. Soft mounting of the pins 33/flexibility in the carrier 34 facilitates this re-balancing. Small variations between planet gears 32 and/or misalignments of pins 33 or shafts 26 may therefore be accommodated by flexibility within the gearbox 30. Having an odd number of planet gears 32 (e.g. 3, 5 or 7 planet gears) may facilitate this automatic re-distribution of load-share, although even numbers of planet gears may be used in some arrangements.

The following general definitions of stiffnesses may be used herein:

### Radial bending stiffness

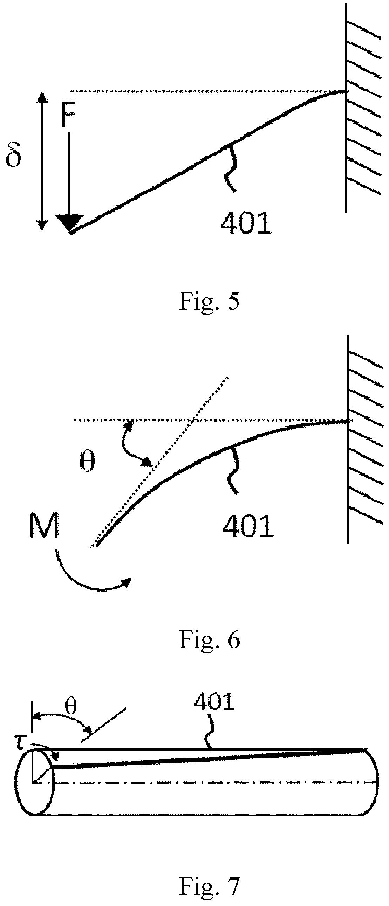

A radial bending stiffness is a measure of deformation caused by a given force applied in any one selected radial direction (i.e. any direction perpendicular to and passing through the engine axis). The radial bending stiffness is defined with reference to Figure 5 in terms of the deformation of a cantilevered beam 401. As illustrated in Figure 5, a force, F, applied at the free end of the beam in a direction perpendicular to the longitudinal axis of the beam causes a linear perpendicular deformation, δ. The radial bending stiffness is the force applied for a given linear deformation i.e. F/δ. In the present application, the radial bending stiffness is taken relative to the rotational axis of the engine 9, and so relates to the resistance to linear deformation in a radial direction of the engine caused by a radial force. The beam, or equivalent cantilevered component, extends along the axis of rotation of the engine, the force, F, is applied perpendicular to the axis of the engine, along any radial direction, and the displacement δ is measured perpendicular to the axis of rotation, along the line of action of the force. The radial bending stiffness as defined herein has SI units of N/m. In the present application, unless otherwise stated, the radial bending stiffness is taken to be a free-body stiffness i.e. stiffness measured for a component in isolation in a cantilever configuration, without other components present which may affect its stiffness. When the force is applied perpendicular to the cantilevered beam, and at the free end of the beam, the resultant curvature is not constant but rather increases towards the fixed end of the beam.

For some components, the beam may more appropriately be constrained to move in a particular way as is described in more detail for the specific example of pins 33 below.

### Tilt stiffness

A tilt stiffness is defined with reference to Figure 6, which shows the resulting deformation of a cantilevered beam 401 under a moment, M, applied at its free end. The tilt stiffness is a measure of the resistance to rotation of a point on the component at which a moment is applied. As can be seen in Figure 6, an applied moment at the free end of the cantilevered beam causes a constant curvature along the length of the beam between its free and fixed ends. The applied moment, M, causes a rotation θ of the point at which it is applied. The tilt stiffness as defined herein therefore has SI units of Nm/radian.

The tilt stiffness may be expressed as an effective linear tilt stiffness for a component having a given radius by expressing the tilt stiffness in terms of a pair of equal and opposite forces, F, acting at either end of that radius (rather than the moment) and the arc displacement at that radius (i.e. displacement measured along a circumference of a circle having that radius). An approximate or overall tilt angle, α, may be defined for the purposes of calculating the effective linear stiffness. The arc displacement may be referred to as rα. The effective linear tilt stiffness is given by the ratio of effective force divided by the displacement, F/ rα and has the units N/m.

### Torsional stiffness

Figure 7 illustrates the definition of the torsional stiffness of a shaft 401 or other body. A torque, τ, applied to the free end of the beam causes a rotational deformation, θ (e.g. twist) along the length of the beam. The torsional stiffness is the torque applied for a given angle of twist i.e. τ/θ. The torsional stiffness has SI units of Nm/rad.

An effective linear torsional stiffness may be determined for a component having a given radius. The effective linear torsional stiffness is defined in terms of an equivalent tangential force applied at a point on that radius (with magnitude of torque divided by the radius) and the distance δ (with magnitude of the radius multiplied by θ) moved by a point corresponding to the rotational deformation θ of the component.

More specific definitions of stiffnesses relating to embodiments described herein are provided below for ease of understanding.

### Carrier Stiffnesses

The planet carrier 34 holds the planet gears 32 in place. In various arrangements including the embodiment being described, the planet carrier 34 comprises a forward plate 34a and a rearward plate 34b, and pins 33 extending between the plates, as illustrated in Figures 9 to 17. The pins 33 are arranged to be parallel to the engine axis 9. In alternative embodiments, a plate 34b may be provided on only one side - no plate or only a partial plate may be provided on the other side of the carrier 34. In the embodiment shown in Figure 15, the carrier 34 additionally comprises lugs 34c, which may also be referred to as wedges or a web, between the forward and rearward plates 34a, 34b. The lugs 34c may increase the overall stiffness of the carrier 34.

The stiffness of the carrier 34 is selected to be relatively high to react centrifugal forces and/or to maintain gear alignment. The skilled person would appreciate that stiffness is a measure of the displacement that results from any applied forces or moments, and may not relate to strength of the component. Hence to react a high load, any stiffness is acceptable so long as the resulting displacement is tolerable. How high a stiffness is desired to keep a displacement within acceptable limits therefore depends on position and orientation of the gears, which is generally referred to as gear alignment (or mis-alignment).

### Carrier Radial Bending Stiffness

In the embodiment being described, the carrier radial bending stiffness is determined treating the carrier 34 as a free-body fixedly mounted at one plate 34b, with a (radial) force, F, applied at the axial position of the axial centre point of the other plate 34a. This is illustrated in Figure 9, with arrow F indicating the (radial) force on the plate 34a and δ illustrating the (radial) displacement of the plate 34a. The force, F, is shown acting along a line that passes through the engine axis 9. In embodiments with only one plate 34a, the ends of the pins 33 further from the single plate 34a are held in place instead.

In some embodiments, for example in embodiments in which the fan diameter is in the range from 240 to 280 cm, the radial bending stiffness may be equal to 2.30x10⁹ or 3.85 x10⁹ N/m. In some embodiments, for example in embodiments in which the fan diameter is in the range from 330 to 380 cm, the radial bending stiffness may be equal to or greater than 3x10⁹N/m (and optionally may be equal to 3.92x10⁹ N/m or 7.70 x10⁹ N/m).

In various embodiments, the radial bending stiffness of the carrier 34 is in the range from 2.0 x10⁹ to 1.5x10¹¹N/m. In some embodiments, for example in embodiments in which the fan diameter is in the range from 240 to 280 cm, the radial bending stiffness of the carrier 34 may be in the range from 2x10⁹ to 5 x10⁹ N/m and optionally may be equal to 3.85 x10⁹ N/m or to 2.30x10⁹ N/m. In some embodiments, for example in embodiments in which the fan diameter is in the range from 330 to 380 cm, the radial bending stiffness of the carrier 34 may be in the range from 2.0 x10⁹ to 1.6x10¹¹ N/m and optionally may be in the range from 3.0x10⁹ to 9.0x10⁹ N/m (and optionally may be equal to 7.70 x10⁹ N/m or to 3.92x10⁹ N/m).

The carrier 34 serves to locate the planet gears 32 within the gearbox 30 and to reduce or avoid misalignment. The skilled person would appreciate that the desired carrier stiffness may be obtained in various different ways, for example by adjusting one or more of carrier material(s) and carrier geometry as appropriate. For a given material, the stiffness may be a function of carrier and gearbox size, and gearbox configuration, for example. Planet gear number and gearbox ratio may also be adjusted to arrive at the desired stiffness. For example, the gear ratio of the gearbox 30 may be changed, so causing the planet gear spacing, and in some cases the number of planet gears 32, to change. The change in planet gear spacing may provide more (or less) space for lugs 34c between the gears 32, and the sizes and shapes of these lugs 34c may be adjusted to achieve the desired carrier stiffness.

### Carrier Tilt Stiffness

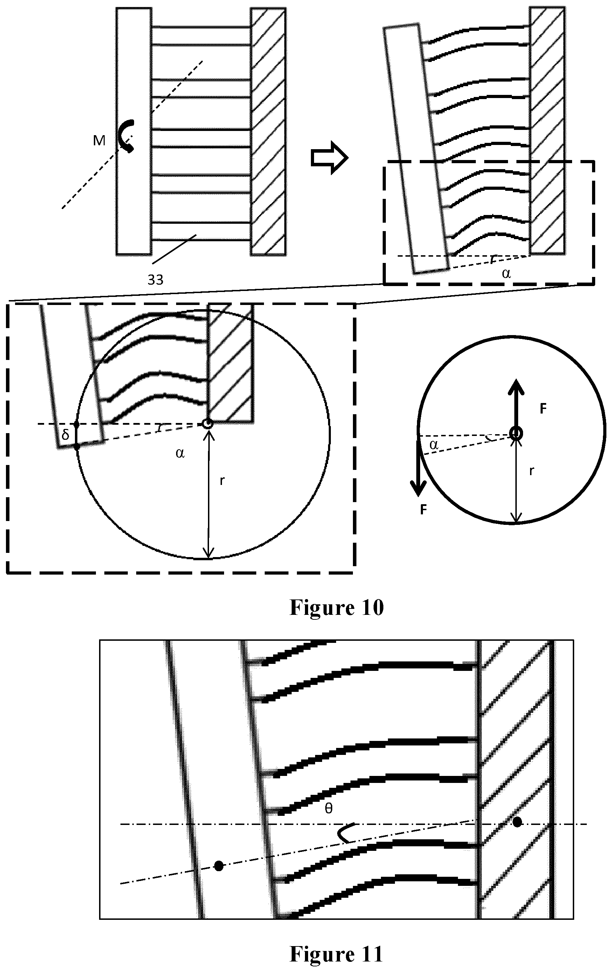

Carrier tilt stiffness is a measure of the resistance of the carrier 34 to an applied moment, M, as illustrated in Figure 10. The axis of the moment is perpendicular to the engine axis 9. Two points of the carrier 34 are selected for measuring tilt stiffness: a forward point at the axial position of the axial centre point of the forward plate 34a and rearward point at the axial position of the axial centre point of the rearward plate 34b. The rearward plate 34b is held to be rigid and non-rotating, as illustrated by the diagonal lines in Figure 10.

In response to the applied moment, M, which is an anticlockwise moment in the example shown, but could be a clockwise moment in other examples, the carrier 34 bends through an angle θ - the angle θ is not constant at each point along the length of the carrier 34 as the carrier does not have a constant section. θ may therefore be measured between a line parallel to the engine axis 9 and passing through the rearward point and the forward point pre-deformation (perpendicular to forward and rear faces of the carrier plates) and a line passing through the forward point and perpendicular to forward and rear faces of the forward carrier plate (no longer parallel to the engine axis) after the deformation. This is shown in Figure 11.

The carrier 34 bends through an overall angle α, resulting in an arc displacement δ. The angle, α, is measured between a line parallel to the engine axis 9 and passing through the rearward point and the forward point pre-deformation (as for θ) and a line passing through the forward point and the rearward point after the deformation (in contrast to θ). The values of θ and α may therefore be different.

An effective linear tilt stiffness can therefore be defined for the carrier 34 as described above. The radius, r, chosen for the definition of the effective linear tilt stiffness is that of a circle centred on a point on the surface of the plate 34b held to be rigid and passing through an original axial centrepoint of the forward plate 34a and the same point post-deformation, as shown in the close-up portion of Figure 10. The two equal and opposite forces, F, are marked on the schematic force diagram shown on the bottom right of Figure 10, one at the centre of the circle of radius r, and one at the far end of that radius - the magnitude of F is selected based on the moment applied. The overall angle, α, is measured between a first radius before the deformation and a second radius after the deformation. The axial centrepoint at the radial position of the lower edge of the forward plate 34a is selected for ease of reference - any other point along the axial centreline of the forward plate 34a may be selected equivalently (e.g. the point of application of the moment). The arc displacement (arc distance) δ is equal to rα.

In various embodiments, the tilt stiffness of the carrier 34 is greater than or equal to 1.3 x10⁹ Nm/radian. In some embodiments, for example in embodiments in which the fan diameter is in the range from 240 to 280 cm, the tilt stiffness of the carrier 34 may be greater than or equal to 2.2 x10⁹ Nm/radian, and optionally may greater than or equal to 2.4x10⁹ Nm/radian (and optionally may be equal to 2.71 x10⁹ Nm/radian). In some embodiments, for example in embodiments in which the fan diameter is in the range from 330 to 380 cm, the tilt stiffness of the carrier 34 may be greater than or equal to 2.3 x10⁹ Nm/radian and optionally may be greater than or equal to 3.0x10⁹ Nm/radian (and optionally may be equal to 5.70 x10⁹ Nm/radian).

In various embodiments, the tilt stiffness of the carrier 34 is in the range from 1.3 x10⁹ to 1.2x10¹¹ Nm/radian. In some embodiments, for example in embodiments in which the fan diameter is in the range from 240 to 280 cm, the tilt stiffness of the carrier 34 may be in the range from 2.4x10⁹ to 5.0 x10⁹ Nm/radian (and optionally may be equal to 2.71 x10⁹ Nm/radian). In some embodiments, for example in embodiments in which the fan diameter is in the range from 330 to 380 cm, the tilt stiffness of the carrier 34 may be in the range from 3.0x10⁹ to 9.0x10⁹ Nm/radian (and optionally may be equal to 5.70 x10⁹ Nm/radian).

In various embodiments, the effective linear tilt stiffness of the carrier 34 is greater than or equal to 3.40x10⁹ N/m, and optionally greater than or equal to 8.0 x10⁹ N/m. In some embodiments, for example in embodiments in which the fan diameter is in the range from 240 to 280 cm, the effective linear tilt stiffness of the carrier 34 may be greater than or equal to 1.4 x10¹⁰ N/m, and optionally may be greater than or equal to 1.42x10¹⁰ N/m (and optionally may be equal to 1.68 x10¹⁰ N/m). In some embodiments, for example in embodiments in which the fan diameter is in the range from 330 to 380 cm, the effective linear tilt stiffness of the carrier 34 may be greater than or equal to 1.5 x10¹⁰ N/m and optionally may be greater than or equal to 3.0x10¹⁰ N/m, and optionally greater than or equal to 7.0x10¹⁰ N/m (and optionally may be equal to 8.36 x10¹⁰ N/m).

In various embodiments, the effective linear tilt stiffness of the carrier 34 is in the range from 3.40x10⁹ to 4.20x10¹² N/m, and optionally in the range from 8.0 x10⁹ to 1.7x10¹² N/m. In some embodiments, for example in embodiments in which the fan diameter is in the range from 240 to 280 cm, the effective linear tilt stiffness of the carrier 34 may be in the range from 1.4 x10¹⁰ to 8.4x10¹¹ N/m, and optionally may be in the range from 1.42x10¹⁰ to 2.72 x10¹⁰ N/m (and optionally may be equal to 1.68 x10¹⁰ N/m). In some embodiments, for example in embodiments in which the fan diameter is in the range from 330 to 380 cm, the effective linear tilt stiffness of the carrier 34 may be in the range from 1.5 x10¹⁰ to 4.2x10¹² N/m and optionally may be in the range from 3.0x10¹⁰ to 1.0x10¹¹ N/m, and optionally from 7.0x10¹⁰ to 1.0x10¹¹ N/m (and optionally may be equal to 8.36 x10¹⁰ N/m).

As discussed above, excess tilt deflections of the carrier 34 may be more damaging than radial bending or torsional deflections for the same magnitude of deflection as tilt deflections may produce two compounding effects - firstly, load share may worsen, with some planet gears 32 taking a larger share of the load than others, and secondly face distribution of that load shifts. The larger force on a particular planet gear 32 is therefore concentrated on one side of the gear rather than equally distributed across the tooth. The increased load on that gear 32 and the increased concentration of that load may therefore damage the gear teeth.

### Carrier Torsional Stiffness

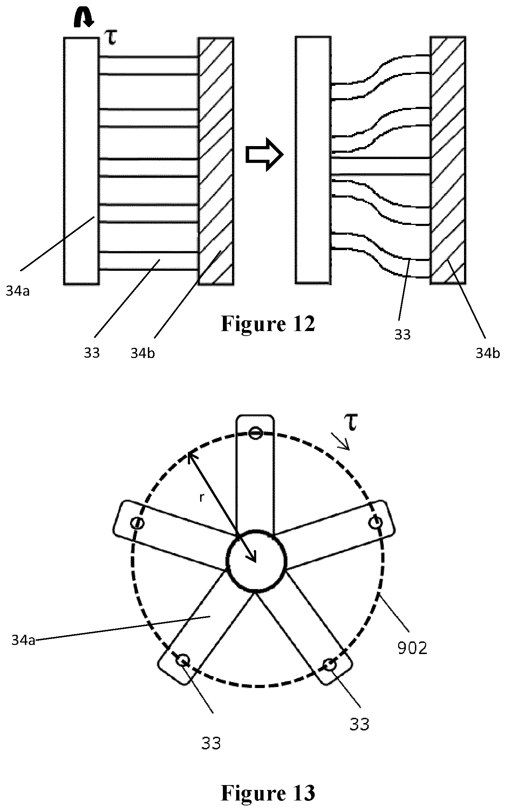

Carrier torsional stiffness is a measure of the resistance of the carrier 34 to an applied torque, τ, as illustrated in Figure 12 (axial cross-section) and Figures 13 to 15 (radial cross-section). The axis of the torque is parallel to the engine axis 9. The diagonal lining of the plate 34b at the rearward end of the carrier 30 indicates that plate 34b is treated as rigid and non-rotating (as for a cantilever beam mounting). In embodiments with only one plate 34a, the ends of the pins 33 (and of the lugs 34c if present) further from the single plate 34a are held in place instead.

The torque, τ, is applied to the carrier 34 (at the position of the axial mid-point of the forward plate 34a) and causes a rotational deformation, θ (e.g. twist) along the length of the carrier 34. The twist causes the carrier 34 to "wind up" as the ends of the pins 33 (and of the lugs 34c if present) are held at a fixed radius on the carrier plates 34a, 34b.

The angle through which a point on an imaginary circle 902 on the forward plate 34a passing through the longitudinal axis of each pin 33 moves is θ, where θ is the angle measured in radians. The imaginary circle 902 may be referred to as the pin pitch circle diameter (pin PCD). The pin PCD may be in the range from 0.38 to 0.65 m, for example being equal to 0.4 m or 0.55 m. An effective linear torsional stiffness can therefore be defined for the carrier 34 as described above , using the radius r of the imaginary circle 902 (e.g. as illustrated in Figure 13).

In various embodiments, the torsional stiffness of the carrier 34 is greater than or equal to 1.60x10⁸ Nm/rad, and optionally greater than or equal to 2.7x10⁸ Nm/rad. In some embodiments, for example in embodiments in which the fan diameter is in the range from 240 to 280 cm, the torsional stiffness of the carrier 34 may be greater than or equal to 1.8x10⁸ Nm/rad, and optionally may be greater than or equal to 2.5x10⁸ Nm/rad (and optionally may be equal to 4.83x10⁸ Nm/rad). In some embodiments, for example in embodiments in which the fan diameter is in the range from 330 to 380 cm, the torsional stiffness of the carrier 34 may greater than or equal to 6.0x10⁸ Nm/rad and optionally may be greater than or equal to 1.1x10⁹ Nm/rad (and optionally may be equal to 2.17x10⁹ Nm/rad).

In various embodiments, the torsional stiffness of the carrier 34 is in the range from 1.60x10⁸ to 1.00x10¹¹ Nm/rad, and optionally in the range from 2.7x10⁸ to 1x10¹⁰ Nm/rad. In some embodiments, for example in embodiments in which the fan diameter is in the range from 240 to 280 cm, the torsional stiffness of the carrier 34 may be in the range from 1.8x10⁸ to 4.8x10⁹ Nm/rad, and optionally may be in the range from 2.5x10⁸ to 6.5x10⁸ Nm/rad (and optionally may be equal to 4.83x10⁸ Nm/rad). In some embodiments, for example in embodiments in which the fan diameter is in the range from 330 to 380 cm, the torsional stiffness of the carrier 34 may be in the range from 6.0x10⁸ to 2.2x10¹⁰ Nm/rad and optionally may be in the range from 1.1x10⁹ to 3.0x10⁹ Nm/rad (and optionally may be equal to 2.17x10⁹ Nm/rad).

In various embodiments, the effective linear torsional stiffness of the carrier 34 may be greater than or equal to 7.00x10⁹ N/m, and optionally greater than or equal to 9.1x10⁹ N/m. In some embodiments, for example in embodiments in which the fan diameter is in the range from 240 to 280 cm, the effective linear torsional stiffness of the carrier 34 may be greater than or equal to 7.70x10⁹ N/m. In other such embodiments, the effective linear torsional stiffness of the carrier 34 may be greater than or equal to 9.1x10⁹ N/m, optionally greater than or equal to 1.1x10¹⁰ N/m (and optionally may be equal to 1.26x10¹⁰ N/m). In some embodiments, for example in embodiments in which the fan diameter is in the range from 330 to 380 cm, the effective linear torsional stiffness of the carrier 34 may be greater than or equal to 1.2x10¹⁰ N/m and optionally may be greater than or equal to 2.1x10¹⁰ N/m (and optionally may be equal to 2.88x10¹⁰ N/m).

In various embodiments, the effective linear torsional stiffness of the carrier 34 may be in the range from 7.00x10⁹ to 1.20x10¹¹ N/m, and optionally in the range from 9.1x10⁹ to 8.0x10¹⁰ N/m. In some embodiments, for example in embodiments in which the fan diameter is in the range from 240 to 280 cm, the effective linear torsional stiffness of the carrier 34 may be in the range from 9.1x10⁹ to 6.0x10¹⁰ N/m, and optionally may be in the range from 7x10⁹ to 2x10¹⁰ N/m, or from 8.5x10⁹ to 2x10¹⁰ N/m (and optionally may be equal to 1.26x10¹⁰ N/m). In some embodiments, for example in embodiments in which the fan diameter is in the range from 330 to 380 cm, the effective linear torsional stiffness of the carrier 34 may be in the range from 1.2x10¹⁰ to 1.2x10¹¹ N/m and optionally may be in the range from 1.0x10¹⁰ to 5.0x10¹⁰ N/m (and optionally may be equal to 2.88x10¹⁰ N/m).

The torsional stiffness of the carrier 34 may be controlled so as to be within a desired range by adjusting one or more parameters, including carrier material(s), carrier geometry, and the presence or absence of lugs.

### Planet Pin Stiffnesses

The planet carrier 34 holds the planet gears 32 in place. The pins 33 serve to locate each planet gear 32 on the carrier 34 and to reduce or avoid misalignment of the planet gears 32. In the embodiment shown in Figure 16, five planet gears 32 are provided in the gearbox 30, with one pin 33 for each planet gear 32. In alternative embodiments, a different number of planet gears 32 may be provided, for example 3, 4, 5, 6, 7, 8 or 9 planet gears 32. The skilled person would appreciate that an odd number of planet gears (e.g. 3, 5, 7, 9) may improve load and/or stress sharing within the gearbox 30. In particular, the skilled person would appreciate that the use of an odd number of planet gears may improve the dynamic loading in gearboxes which have sun gear tooth numbers which are not whole numbers divisible by the number of planets (e.g. 41 sun gear teeth, 5 planets) as in the embodiment being described. In alternative embodiments in which the sun gear tooth number is wholly divisible by the number of planets (e.g. sun gear 40 teeth, 5 planets) there may be less or no dynamic benefit.

Each planet gear 32 is mounted to the rest of the planet carrier 34 by a pin 33, also referred to as a planet pin. The planet pins 33 are mounted on the carrier 34 such that they move with the carrier 34 as the carrier rotates in a planetary arrangement, or remain in place with a non-rotating carrier 34 in a star arrangement. The pins 33 may be referred to as axles/supports for the planets 32. A lower stiffness of the planet pins 33 may reduce differential load and improve load share factor relative to a higher stiffness of the planet pins 33.

The pins 33 may be connected to the carrier plates 342, 34b in any desired manner. For example, in the embodiment being described, the pins 33 are provided with a soft connection 31a, 31b to each carrier plate 34a, 34b. The connection is described as soft as it is arranged to facilitate some movement of the pins 33, which may help to improve load share. Such a soft connection may be formed by the plate 34a,b itself - for example having cut-away portions of material to provide some movement of the plate - or by a part of the pin, or by a separate component. The soft connections 31a, 31b are classed as a part of the pin 33 for the assessment of the stiffnesses described herein. The soft connections 33a, 33b are illustrated only for the pin of interest in Figures 16 and 17, but the skilled person would appreciate that each pin 33 would have an equivalent connection.

### Planet Pin Radial Bending Stiffness

The radial bending stiffness of a pin 33 may be measured in different ways, for example depending on the pin design. The soft connections 31a, 31b of the pin 33, if present, are classed as a part of the pin 33. For an unjointed pin 33, as shown in Figure 16, each pin 33 may be treated as being rigidly mounted on one carrier plate 34b (illustrated by the diagonal lines on the carrier plate 34b). The other end of each pin may be treated as being slidably mounted on the other carrier plate 34a, such that the end of the pin 33 can slide along the plate 34a, but cannot move away from the plate 34a. A radial force, F, is then applied at the position on the pin corresponding to the sliding plane, and a resultant radial displacement, δ, at that axial position is measured.

For a pin 33 with two separate shaft portions 33a, 33b and a joint 33c (e.g. a ball joint) between the two, as shown in Figure 17, the pin 33 may instead be treated as being rigidly mounted on both carrier plates 34a,34b (illustrated by the diagonal lines on the carrier plates 34a, 34b). A radial force, F, is then applied at the position on the pin 33 corresponding to the axial centre point of the pin, and a resultant radial displacement, δ, at that axial position is measured. In embodiments with a non-central joint 33c, the axial centre point of the joint 33c may be selected in place of the axial centre point of the pin 33.

In various embodiments, the radial bending stiffness of the pin 33 is greater than or equal to 3.00x10⁸ N/m, and optionally greater than or equal to 6.3x10⁸ N/m. In some embodiments, for example in embodiments in which the fan diameter is in the range from 240 to 280 cm, the radial bending stiffness of the pin 33 shaft may be greater than or equal to 6.3x10⁸ N/m, and optionally may be greater than or equal to 6.7x10⁸ N/m (and optionally may be equal to 7.70x10⁸ N/m). In some embodiments, for example in embodiments in which the fan diameter is in the range from 330 to 380 cm, the radial bending stiffness of the pin 33 may be greater than or equal to 9.0x10⁸ N/m and optionally may be greater than or equal to 1.0x10⁹ N/m (and optionally may be equal to 1.54x10⁹ N/m).

In various embodiments, the radial bending stiffness of the pin 33 is in the range from 3.00x10⁸ to 3.00x10⁹ N/m, and optionally in the range from 6.3x10⁸ to 2.5x10⁹ N/m. In some embodiments, for example in embodiments in which the fan diameter is in the range from 240 to 280 cm, the radial bending stiffness of the pin 33 shaft may be in the range from 6.3x10⁸ to 1.5x10⁹ N/m, and optionally may be in the range from 6.7x10⁸ to 8.7x10⁸ N/m (and optionally may be equal to 7.70x10⁸ N/m). In some embodiments, for example in embodiments in which the fan diameter is in the range from 330 to 380 cm, the radial bending stiffness of the pin 33 may be in the range from 9.0x10⁸ to 3.0x10⁹ N/m and optionally may be in the range from 1.0x10⁹ to 2.0x10⁹ N/m (and optionally may be equal to 1.54x10⁹ N/m).

The skilled person would appreciate that the desired pin stiffness may be obtained in various different ways, for example by adjusting one or more of pin material(s) (often steels) and gearbox and/or pin geometry as appropriate. For a given material, the stiffness may be a function of pin diameter and whether the pin is solid, or hollow, for example. By way of further example, the gear ratio of the gearbox 30 may be adjusted and the planet gear size may change accordingly, for example allowing for a larger diameter pin 33 for a larger planet gear 32, so achieving a higher stiffness.

### Planet Pin Tilt Stiffness

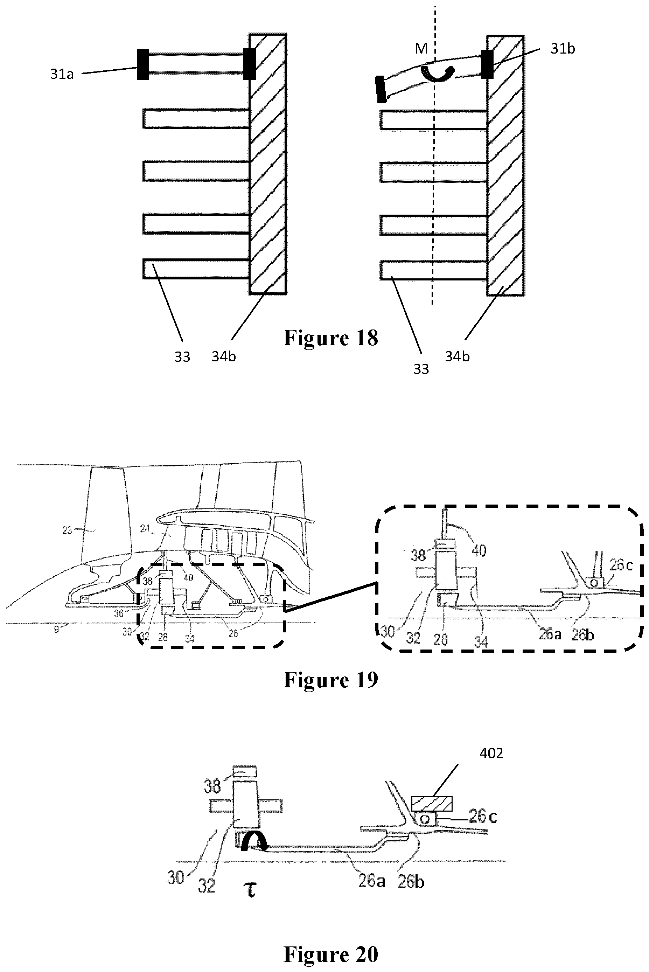

Each pin 33 (including its soft connections 31a, 31b, if present) is modelled as a free body rigidly mounted on one carrier plate 34b (illustrated by the diagonal lines on the carrier plate 34b as shown in Figure 18) to calculate the tilt stiffness. A moment is then applied at the axial centre point of the pin 33. The axis of the moment is perpendicular to the engine axis 9. Two points of the pin 33 are selected for measuring tilt stiffness: a central point at the axial position of the axial centre point of the pin 33, and a rearward point at the axial position of the rigid connection to the rearward plate 34b. The rearward plate 34b is held to be rigid and non-rotating, as illustrated by the diagonal lines in Figures 17 and 18.

In response to the applied moment, M, which is an anticlockwise moment in the example shown, but could be a clockwise moment in other examples, the pin 33 bends through an angle θ, resulting in an arc displacement δ of the central point (the point of application of the moment).

If the pin 33 is asymmetric, a second measurement may be taken modelling the pin 33 as a free body rigidly mounted on the other carrier plate 34a. Two points of the pin 33 are selected for this measurement: a central point at the axial position of the axial centre point of the pin 33, and a forward point at the axial position of the rigid connection to the forward plate 34a. The forward plate 34a is held to be rigid and non-rotating. An average of the two tilt stiffness values may then be taken.

An effective linear tilt stiffness can therefore be defined for the pin 33 as described above. The radius, r, chosen for the definition of the effective linear tilt stiffness is that of a circle centred on a point on the surface of the plate 34b held to be rigid and passing through an original axial centrepoint of the pin 33 (the point of application of the moment) and the same point post-deformation. The arc displacement δ is equal to rθ.

The same approach may be used for any design of pin 33.

In various embodiments, the tilt stiffness of the pin 33 is greater than or equal to 4.00x10⁶ Nm/rad, and optionally greater than or equal to 8.7x10⁶ Nm/rad. In some embodiments, for example in embodiments in which the fan diameter is in the range from 240 to 280 cm, the tilt stiffness of the pin 33 may be greater than or equal to 8.7x10⁶ Nm/rad, and optionally may be greater than or equal to 9.8x10⁶ Nm/rad (and optionally may be equal to 1.02x10⁷ Nm/rad). In some embodiments, for example in embodiments in which the fan diameter is in the range from 330 to 380 cm, the tilt stiffness of the pin 33 may be greater than or equal to 1.4x10⁷ Nm/rad and optionally may be greater than or equal to 2.5x10⁷ Nm/rad (and optionally may be equal to 3.14x10⁷ Nm/rad).

In various embodiments, the tilt stiffness of the pin 33 is in the range from 4.00x10⁶ to 6.30x10⁷ Nm/rad, and optionally in the range from 8.7x10⁶ to 4.5x10⁷ Nm/rad. In some embodiments, for example in embodiments in which the fan diameter is in the range from 240 to 280 cm, the tilt stiffness of the pin 33 may be in the range from 8.7x10⁶ to 2.1x10⁷ Nm/rad, and optionally may be in the range from 9.8x10⁶ to 1.9x10⁷ Nm/rad (and optionally may be equal to 1.02x10⁷ Nm/rad). In some embodiments, for example in embodiments in which the fan diameter is in the range from 330 to 380 cm, the tilt stiffness of the pin 33 may be in the range from 1.4x10⁷ to 6.3x10⁷ Nm/rad and optionally may be in the range from 2.5x10⁷ to 4.2x10⁷ Nm/rad (and optionally may be equal to 3.14x10⁷ Nm/rad).

In order to obtain a desired pin tilt stiffness, similar options may apply as for planet pin radial bending stiffness described above.

### Stiffnesses of Shafts and Supports

### Gearbox Input Shaft Torsional Stiffness

In the arrangement being described, the gearbox input shaft 26a drives the sun gear 28. The gearbox input shaft 26a may therefore be referred to as a sun input shaft 26a. The gearbox input shaft 26a may be a sun input shaft 26a in star arrangements (as well as planetary). The gearbox input shaft 26a may also be referred to as a part of the core shaft 26 - a forward portion 26a of the core shaft 26 provides the input to the gearbox 30.

The core shaft 26 therefore comprises a gearbox input shaft 26a, which rotates with the rest of the core shaft 26 but may have a different stiffness from the rest of the core shaft. In the arrangement being described with respect to Figures 1 and 2, the core shaft extends between the turbine 19 and the gearbox 30, connecting the turbine 19 to the compressor 14, and the turbine and compressor to the gearbox 30. A rearward portion 26b of the core shaft 26 extends between the turbine 19 and the compressor 14, connecting the turbine to the compressor. A forward portion 26a extends between the compressor 14 and the gearbox, connecting the turbine and compressor to the gearbox 30. As this forward portion provides the torque to the gearbox 30, it is referred to as the gearbox input shaft. In the arrangement shown, a bearing 26c is present on the core shaft 26 at or near the axial position at which the rearward portion 26b meets the gearbox input shaft 26a.

In some gearboxes 30, the planet carrier 34 may be driven by the core shaft 26, and more specifically by the gearbox input shaft 26a, for example - in such embodiments, the gearbox input shaft 26a may not be a sun input shaft 26. However, this may make mounting of the sun gear 28 more difficult.

In the described arrangement, the core shaft 26 is divided into two sections as shown in Figure 19; a first section 26a (the gearbox input shaft) extending from the gearbox 30 and connected to the sun gear 28, and a second section 26b extending rearwardly from the first section and connected to the turbine 19. In the described arrangement, the first section 26a is designed to have a lower stiffness than the second section 26b - the gearbox input shaft 26a may therefore provide a soft mounting for the sun gear 28 whilst maintaining rigidity elsewhere in the engine 10. In the described arrangement, the second section 26b is designed to be effectively rigid (as compared to the stiffness of the first section 26a) - a torsional stiffness of the core shaft 26 may therefore be effectively equal to the torsional stiffness of the gearbox input shaft portion thereof. The second section 26b connecting the turbine and the compressor may be referred to as the turbine shaft 26b. The turbine shaft 26b is arranged to transmit the torsional loads to drive the compressor and the gearbox 30, as well as the compressor and turbine axial loads.

In alternative embodiments, the core shaft 26 may not be divided into sections of different stiffness, and may instead have a constant stiffness. In alternative or additional embodiments, the core shaft 26 may be divided into a larger number of sections.

The core shaft 26 is mounted using a bearing 26c - the bearing 26c is the first bearing on the core shaft 26 axially downstream of the gearbox 30. In the described arrangement, the bearing 26c is on the second section 26b of the shaft 26 - in other embodiments, it may be on a different, or on the only, shaft section. The stiffnesses of the gearbox input shaft 26a are measured holding the bearing 26c rigid, and taking the connection of the bearing 26c to the rest of the core shaft 26b as rigid, such that only the stiffnesses of the first portion 26a are considered. For the purpose of determining torsional stiffness, the gearbox input shaft 26a is considered to be free at the end to which the applied torque τ is applied.

Gearbox input shaft torsional stiffness is a measure of the resistance of the shaft 26a to an applied torque, τ, as illustrated in Figure 20. It may be described as resistance to twisting, or winding, of the shaft 26a. The axis of the moment is parallel to the engine axis 9. The diagonally lined box 402 at the location of the bearing 26c of the shaft 26a is shown to indicate the connection to the bearing 26c / the shaft 26 at the position of the bearing as being treated as rigid and non-rotating (as for a cantilever beam mounting). The shaft 26a is otherwise treated as a free body (the sun gear-planet gear mesh stiffness is not included).

A torque, τ, is applied to the shaft 26a (at the forward position - the position of the axial mid-point of the sun gear 28) and causes a rotational deformation, θ (e.g. twist) along the length of the shaft 26a. θ is measured at the position of application of the torque. As described above, the core shaft 26 is held to be non-rotating at the location of the bearing 26c, such that the value of the twist increases from zero to θ along the length of the first shaft portion 26a. The angle through which a point on the shaft circumference at the forward position moves is θ, where θ is the angle measured in radians. *r* is the radius of the shaft 26a. In embodiments in which the gearbox input shaft 26 varies in radius, the radius of the shaft 26a at the interface to the sun gear 28 may be used as the radius *r* to calculate the effective linear torsional stiffness (i.e. the radius at the forward end of the shaft for the embodiment shown, where the torque is applied). An effective linear torsional stiffness can therefore be defined for the gearbox input shaft 26a as described above.

In the embodiment shown, the position of the axial mid-point of the sun gear 28 is also at or near the forward end of the shaft 26. In alternative embodiments, the shaft 26 may extend further forward of the sun gear 28; the forward position used for the application of the torque, force or moment is still taken to be the position of the axial mid-point of the sun gear 28 in such embodiments.

In various embodiments, the torsional stiffness of the gearbox input shaft 26a is greater than or equal to 1.4x10⁶ Nm/radian, and optionally greater than or equal to 1.6x10⁶ Nm/radian. In some embodiments, for example in embodiments in which the fan diameter is in the range from 240 to 280 cm, the torsional stiffness of the gearbox input shaft may be greater than or equal to 1.4x10⁶ Nm/radian or 1.8 x10⁶ Nm/radian. In some embodiments, for example in embodiments in which the fan diameter is in the range from 330 to 380 cm, the torsional stiffness of the gearbox input shaft may be greater than or equal to 3x10⁶ Nm/radian or 5x10⁶ Nm/radian.

In various embodiments, the torsional stiffness of the gearbox input shaft 26a is in the range from 1.4x10⁶ to 2.5x10⁸ Nm/radian, and optionally in the range from 1.6x10⁶ to 2.5x10⁷ Nm/radian. In some embodiments, for example in embodiments in which the fan diameter is in the range from 240 to 280 cm, the torsional stiffness of the gearbox input shaft may be in the range from 1.4x10⁶ to 10x10⁷ Nm/radian, and optionally may be in the range from 1.8x10⁶ to 3x10⁶ Nm/radian (and optionally may be equal to 2.0x10⁶ Nm/radian). In some embodiments, for example in embodiments in which the fan diameter is in the range from 330 to 380 cm, the torsional stiffness of the gearbox input shaft may be in the range from 3x10⁶ to 1x10⁸ Nm/radian and optionally may be in the range from 5x10⁶ to 6x10⁶ Nm/radian (and optionally may be equal to 5.7x10⁶ Nm/radian).

In various embodiments, the effective linear torsional stiffness of the gearbox input shaft 26a is greater than or equal to 4.0x10⁸ N/m, and optionally greater than or equal to 4.3x10⁸ N/m. In some embodiments, for example in embodiments in which the fan diameter is in the range from 240 to 280 cm, the effective linear torsional stiffness of the gearbox input shaft may be greater than or equal to 4.0x10⁸ N/m or 4.4x10⁸ N/m. In some embodiments, for example in embodiments in which the fan diameter is in the range from 330 to 380 cm, effective linear torsional stiffness of the gearbox input shaft may be greater than or equal to 4.3x10⁸ N/m or 6.8x10⁸ N/m.

In various embodiments, the effective linear torsional stiffness of the gearbox input shaft is in the range 4.0x10⁸ to 3.0x10¹⁰N/m, and optionally in the range from 4.3x10⁸ to 9.0x10⁹ N/m. In some embodiments, for example in embodiments in which the fan diameter is in the range from 240 to 280 cm, the effective linear torsional stiffness of the gearbox input shaft may be in the range from 4.0x10⁸ to 1.5x10¹⁰ N/m, and optionally may be in the range from 4.4x10⁸ to 5.4x10⁹ N/m (and optionally may be equal to 4.9x10⁸ N/m, and optionally 4.92x10⁸ N/m). In some embodiments, for example in embodiments in which the fan diameter is in the range from 330 to 380 cm, the effective linear torsional stiffness of the gearbox input shaft may be in the range from 4.3x10⁸ to 3.0x10¹⁰ N/m and optionally may be in the range from 5.0x10⁸ to 8.0x10¹⁰ N/m (and optionally may be equal to 6.8x10⁸ N/m, and optionally 6.84x10⁸ N/m).

One or more of gearbox input shaft 26a material(s), diameter and structure (e.g. hollow or solid, wall thickness) may be adjusted to achieve a stiffness within the desired range.

### Fan Shaft Torsional Stiffness

The fan shaft 36 is defined as the torque transfer component that extends from the output of the gearbox 30 to the fan input. It therefore includes part or all of any gearbox output shaft and fan input shaft that may be provided between those points. For the purposes of defining the stiffness of the fan shaft 36, it is considered to extend between a fan input position and a gearbox output position, and to include all of the torque transfer components between those points. It does not therefore include any components of the gearbox 30 (e.g. the planet carrier 34 or any connecting plate coupled to it) which transmit discrete forces, rather than the fan shaft torque. The gearbox output position therefore may be defined as the point of connection between the fan shaft 36 and the gearbox 30. The fan input position, Y, may be defined as the point of connection between the fan shaft 36 and the fan. The torsional stiffness of the fan shaft 36 is measured between the forward and rearward ends of the fan shaft, the forward end being the interface (Y) with the fan 23 and the rearward end the interface (X) with the gearbox 30.

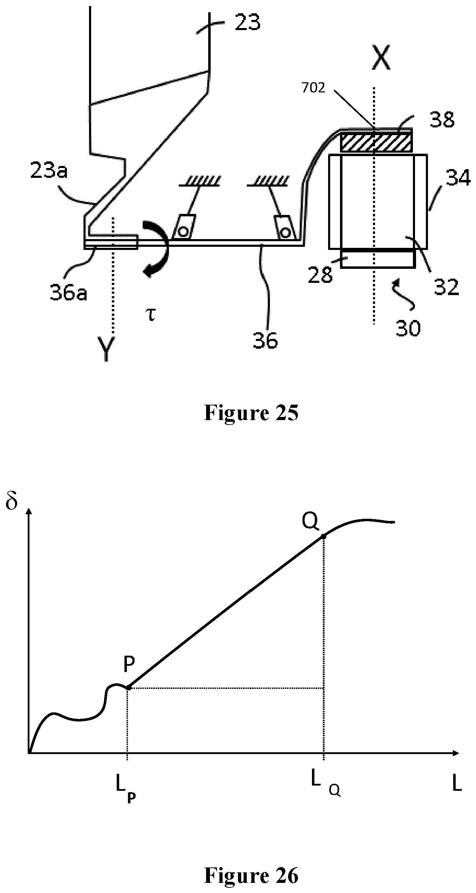

Fan shaft torsional stiffness is a measure of the resistance of the shaft 36 to an applied torque, τ, as illustrated in Figure 25. It may be described as resistance to twisting, or winding, of the shaft 36. The axis of the moment is parallel to the engine axis 9.

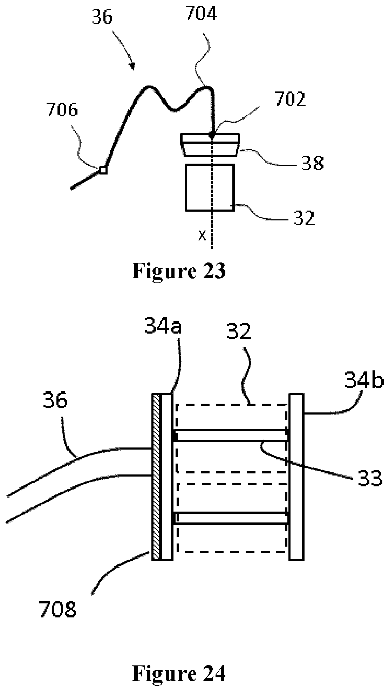

Referring to Figures 23 and 25, where the gearbox 30 is a star gearbox, the gearbox output position (X) is defined as the point of connection 702 between the ring gear 38 and the fan shaft 36. More specifically, it is the point of connection to the annulus of the ring gear 38 (with any connection component extending from the outer surface of the annulus being considered to be part of the ring gear). Where the point of connection is formed by an interface extending in a direction having an axial component, the point of connection is considered to be the axial centreline (X) of that interface as illustrated in Figure 25. The fan shaft 36 includes all torque transmitting components up to the point of connection 702 with the ring gear 38. It therefore includes any flexible portions or linkages 704 of the fan shaft 36 that may be provided, and any connection(s) 706 (e.g. spline connections) between them.

Where the gearbox 30 is in a planetary configuration, the gearbox output position is again defined as the point of connection between the fan shaft 36 and the gearbox 30. An example of this is illustrated in Figure 24, which shows a carrier comprising a forward plate 34a and rearward plate 34b, with a plurality of pins 33 extending between them and on which the planet gears are mounted. The fan shaft 36 is connected to the forward plate 34a via a spline connection 708. In an embodiment such as this, the gearbox output position, X, is taken as any point on the interface between the fan shaft 36 and the forward plate 34a. The forward plate 34a is considered to transmit discrete forces, rather than a single torque, and so is taken to be part of the gearbox 30 rather than the fan shaft. Figure 24 shows only one example of a type of connection between the fan shaft and planet carrier 34. In embodiments having different connection arrangements, the gearbox output position is still taken to be at the interface between components transmitting a torque (i.e. that are part of the fan shaft) and those transmitting discrete forces (e.g. that are part of the gearbox). The spline connection 708 is only one example of a connection that may be formed between the fan shaft 36 and gearbox 30 (i.e. between the fan shaft and the forward plate 34b in the presently described embodiment). In other embodiments, the interface which forms the gearbox output position may be formed by, for example, a curvic connection, a bolted joint or other toothed or mechanically dogged arrangement.

The fan input position, Y, is defined as a point on the fan shaft 36 at the axial midpoint of the interface between the fan 23 and the fan shaft 36. In the presently described embodiment, the fan 23 comprises a support arm 23a arranged to connect the fan 23 to the fan shaft 36. The support arm 23a is connected to the fan shaft by a spline coupling 36a that extends along the length of a portion of the fan shaft 36. The fan input position is defined as the axial midpoint of the spline coupling as indicated by axis Y in Figure 25. The spline coupling shown in Figure 25 is only one example of a coupling that may form the interface between the fan and fan shaft. In other embodiments, for example, a curvic connection, a bolted joint or other toothed or mechanically dogged arrangement may be used. The fan input position, Y, may be unaffected by gearbox type.

The fan shaft 36 has a degree of flexibility characterised in part by its torsional stiffness. For the purpose of determining torsional stiffness, the fan shaft 36 is considered to be free at the end to which the applied torque, τ, is applied.

The diagonally lined ring gear 38 in Figure 25 indicates the ring gear 38 being treated as rigid and non-rotating for the purpose of assessing torsional stiffness of the fan shaft 36. A torque, τ, is applied to the shaft 36 at the fan input position, Y, and causes a rotational deformation, θ (e.g. twist) along the length of the shaft 36. The angle through which a point on the shaft circumference at the fan input position moves is θ, where θ is the angle measured in radians. The radius, *r*, of the fan shaft 36 may be used to determine an effective linear torsional stiffness. In embodiments in which the fan shaft 36 varies in radius, such as the embodiment being described, the radius of the shaft 36 at the fan input position may be used as the radius *r* (i.e. the radius at the forward end of the shaft for the embodiment shown). An effective linear torsional stiffness can therefore be defined for the fan shaft 36 as described above.

In various embodiments, the torsional stiffness of the fan shaft 36 is equal to or greater than 1.3x10⁷ Nm/rad, and optionally equal to or greater than 1.4x10⁷ Nm/rad. In some embodiments, for example in embodiments in which the fan diameter is in the range from 240 to 280 cm the torsional stiffness of the fan shaft 36 may equal to or greater than 1.3x10⁷ Nm/radian, and optionally may be equal to or greater than 1.4x10⁷ Nm/radian (and optionally may be equal to 1.8x10⁷ Nm/radian). In some embodiments, for example in embodiments in which the fan diameter is in the range from 330 to 380 cm, the torsional stiffness of the fan shaft 36 may be equal to or greater than 2.5x10⁷ Nm/radian and optionally may be equal to or greater than 3.5x10⁷ Nm/radian (and optionally may be equal to 5.2x10⁷ Nm/radian).

In various embodiments, the torsional stiffness of the fan shaft 36 is in the range from 1.3x10⁷ to 2.5x10⁹ Nm/rad, and optionally in the range from 1.4x10⁷ to 3.0x10⁸ Nm/rad. In some embodiments, for example in embodiments in which the fan diameter is in the range from 240 to 280 cm the torsional stiffness of the fan shaft 36 may be in the range from 1.3x10⁷ to 2.0x10⁸ Nm/radian, and optionally may be in the range from 1.3x10⁷ or 1.4x10⁷ to 2.3x10⁷ Nm/radian (and optionally may be equal to 1.8x10⁷ Nm/radian). In some embodiments, for example in embodiments in which the fan diameter is in the range from 330 to 380 cm, the torsional stiffness of the fan shaft 36 may be in the range from 2.5x10⁷ to 2.5x10⁹ Nm/radian and optionally may be in the range from 3.5x10⁷ to 7.5x10⁷ Nm/radian (and optionally may be equal to 5.2x10⁷ Nm/radian).

In various embodiments, the effective linear torsional stiffness of the fan shaft 36 may be greater than 1.2x10⁹ N/m, and optionally greater than 1.35x10⁹ N/m. In some embodiments, for example in embodiments in which the fan diameter is in the range from 240 to 280 cm, the effective linear torsional stiffness of the fan shaft 36 may be greater than 1.2x10⁹ N/m, and optionally may be greater than 1.3x10⁹ Nm/radian (and optionally may be equal to 1.5x10⁹ N/m). In some embodiments, for example in embodiments in which the fan diameter is in the range from 330 to 380 cm, the effective linear torsional stiffness of the fan shaft 36 may be greater than 1.5x10⁹ N/m and optionally may be greater than 1.8x10⁹ Nm/radian (and optionally may be equal to 2.1x10⁹ N/m).

In various embodiments, the effective linear torsional stiffness of the fan shaft 36 is in the range from 1.2x10⁹ to 2.0x10¹⁰ N/m, and optionally in the range from 1.35x10⁹ to 1.0x10¹⁰ N/m. In some embodiments, for example in embodiments in which the fan diameter is in the range from 240 to 280 cm, the effective linear torsional stiffness of the fan shaft 36 may be in the range from 1.2x10⁹ to 1.5x10¹⁰ N/m, and optionally may be in the range from 1.3x10⁹ to 2.3x10⁹ Nm/radian (and optionally may be equal to 1.5x10⁹ N/m). In some embodiments, for example in embodiments in which the fan diameter is in the range from 330 to 380 cm, the effective linear torsional stiffness of the fan shaft 36 may be in the range from 1.5x10⁹ to 2.0x10¹⁰ N/m and optionally may be in the range from 1.8x10⁹ to 3.5x10⁹ Nm/radian (and optionally may be equal to 2.1x10⁹ N/m).

One or more of fan shaft 36 material(s), diameter and structure (e.g. hollow or solid, wall thickness) may be adjusted to achieve a stiffness within the desired range.

In various embodiments, including the arrangements being described, e.g. with respect to Figures 21 and 22, a mounting structure for the fan shaft 36 comprises a fan shaft support structure 504. The fan shaft support structure comprises two bearings - a first bearing 506a and a second bearing 506b - via which it is coupled to the fan shaft 36. The bearings 506a, 506a are spaced apart along the axial length of the fan shaft 36. In the described embodiment, both bearings 506a, 506b are provided at positions that are forward of the gearbox 30. In other embodiments, one of the two bearing 506a, 506b used to support the fan shaft 36 may be located at a position rearward of the gearbox 30. In yet other embodiments, more than two bearings may be provided as part of the fan shaft support structure.

### Gearbox Support Torsional Stiffness

An exemplary embodiment of the gas turbine engine is shown in Figure 22, which provides an enlarged view of a region of the engine core 11 around the gearbox 30. The same reference numbers have been used for components corresponding to those shown in Figures 1 to 3. In the arrangement shown in Figure 22 the gearbox 30 has a star arrangement, in which the ring gear 38 is coupled to the fan shaft 36 and the carrier 34 is held in a fixed position relative to the static structure 24 (also referred to as the stationary supporting structure) of the engine core. As noted elsewhere herein, all features and characteristics described herein may apply to a star gearbox and a planetary gearbox, unless explicitly stated otherwise.

The engine core 11 comprises a gearbox support 40 (corresponding to the linkage described with reference to Figure 2) arranged to at least partially support the gearbox 30 in a fixed position within the engine 10. The gearbox support is coupled at a first end to the stationary supporting structure 24 which extends across the core duct 20 carrying the core airflow A as illustrated in Figure 22. In the presently described arrangement, the stationary support structure 24 is or comprises an engine section stator (ESS) that acts as both a structural component to provide a stationary mounting for core components such as the gearbox support 40, and as a guide vane provided to direct airflow from the fan 23. In other embodiments, the stationary supporting structure 24 may comprise a strut extending across the core gas flow path and a separate stator vane provided to direct airflow. In the present embodiment, the gearbox support 40 is coupled at a second end to the planet carrier 34. The gearbox support 40 therefore acts against rotation of the planet carrier 34 relative to the static structure 24 of the engine core. In embodiments where the gearbox 30 is in a planetary arrangement, the gearbox support 40 is coupled to the ring gear 38 so as to resist its rotation relative to the static structure 24 of the engine core.

The gearbox support 40 is defined between the point at which it connects to the gearbox (e.g. to the planet carrier in the present embodiment with a star gearbox 30, or to the ring gear 38 in planetary embodiments) and a point at which it connects to the stationary supporting structure 24. The gearbox support may be formed by any number of separate components providing a coupling between those two points. The gearbox support 40 connects to the gearbox 30, and more specifically to the static gear or gearset - i.e. to the ring gear 38 of a planetary gearbox or the planet carrier 34/planet gear set 32 of a star gearbox. The gearbox support 40 has a degree of flexibility. Gearbox support torsional stiffness is a measure of the resistance of the support 40 to an applied torque, τ, as illustrated in Figure 21. It may be described as resistance to twisting, or winding, of the support 40. The axis of the moment is parallel to the engine axis 9. The cross-hatching of the stationary support structure 24 is provided to indicate the connection to the support 40 being treated as rigid and non-rotating.

For a star gearbox 30, the torsional stiffness of the gearbox support 40 is defined between a circle 902 passing through the centre of each planet gear 32 of the planetary gear set (i.e. through the longitudinal axis of each pin 33) and the interface to the stationary support structure 24, which is treated as fixed. The torsional load is applied at the planet carrier 34, and reacted at the stationary support structure 24.

For a planetary gearbox 30, the torsional stiffness of the gearbox support 40 is defined between the pitch circle diameter (PCD) of the ring gear 38, and the interface to the stationary support structure 24, which is treated as fixed. The torsional load is applied at the ring gear 38, and reacted at the stationary support structure 24. A torque, τ, is applied to the teeth of the ring gear 38 and causes a rotational deformation, θ (e.g. twist) of the support 40. The angle through which a point on the PCD moves is θ, where θ is the angle measured in radians. A radius, *r*, may be defined as the radius of the ring gear 38 (i.e. half of the PCD of the ring gear). An effective linear torsional stiffness can therefore be defined for the gearbox support 40 for a planetary gearbox 30 as described above using the radius *r* = PCD/2.

The pitch circle of a gear is an imaginary circle that rolls without slipping with the pitch circle of any other gear with which the first gear is meshed. The pitch circle passes through the points where the teeth of two gears meet as the meshed gears rotate - the pitch circle of a gear generally passes through a mid-point of the length of the teeth of the gear. The PCD can be roughly estimated by taking the average of the diameter between tips of the gear teeth and the diameter between bases of the gear teeth. In various embodiments the PCD of the ring gear 38, which may also be thought of as a diameter of the gearbox 30, may be greater than or equal to 0.55 m, and optionally greater than or equal to 0.57 m. In some embodiments, for example in embodiments in which the fan diameter is in the range from 330 to 380 cm, the gearbox diameter may be greater than or equal to 0.75 m.

In various embodiments the diameter of the gearbox 30 may be in the range from 0.55 m to 1.2 m, and optionally in the range from 0.57 to 1.0 m. In some embodiments, for example in embodiments in which the fan diameter is in the range from 240 to 280 cm the gearbox diameter may be in the range from 0.55 to 0.70 m, and optionally may be in the range from 0.58 to 0.65 m (and optionally may be equal to 0.61 m). In some embodiments, for example in embodiments in which the fan diameter is in the range from 330 to 380 cm, the gearbox diameter may be in the range from 0.75 to 1.0 m, and optionally from 0.8 to 0.9 m (and optionally may be equal to 0.87 m).

Correspondingly, an effective linear torsional stiffness can therefore be defined for the gearbox support 40 for a star gearbox 30 as described above using the radius *r* of the circle 902 passing through the longitudinal axis of each pin 33 on the carrier 34. The diameter of this circle 902 may be described as a PCD of the planetary gear set, or a pin PCD, so providing r = PCD/2 as for the planetary gearbox example. The pin PCD may be in the range from 0.38 to 0.65 m, for example being equal to 0.4 m or 0.55 m.

In various embodiments, the torsional stiffness of the gearbox support 40 is greater than or equal to 4.2x10⁷ Nm/rad, and optionally greater than or equal to 4.8x10⁷ Nm/rad. In some embodiments, for example in embodiments in which the fan diameter is in the range from 240 to 280 cm the torsional stiffness of the gearbox support 40 may be greater than or equal to 4.2x10⁷ Nm/rad, and optionally may be greater than or equal to 5x10⁷ Nm/rad (and optionally may be equal to 6.1x10⁷ Nm/rad). In some embodiments, for example in embodiments in which the fan diameter is in the range from 330 to 380 cm, the torsional stiffness of the gearbox support 40 may be greater than or equal to 7.0x10⁷ Nm/rad, and optionally may be greater than or equal to 9x10⁷ Nm/rad (and optionally may be equal to 1.8x10⁸ Nm/rad).

In various embodiments, the torsional stiffness of the gearbox support 40 is in the range from 4.2x10⁷ to 1.0x10¹⁰ Nm/rad, and optionally in the range from 4.8x10⁷ to 1.0x10⁹ Nm/rad. In some embodiments, for example in embodiments in which the fan diameter is in the range from 240 to 280 cm the torsional stiffness of the gearbox support 40 may be in the range from 4.2x10⁷ to 6.0x10⁸ Nm/rad, and optionally may be in the range from 5x10⁷ to 7x10⁷ Nm/rad (and optionally may be equal to 6.1x10⁷ Nm/rad). In some embodiments, for example in embodiments in which the fan diameter is in the range from 330 to 380 cm, the torsional stiffness of the gearbox support 40 may be in the range from 7.0x10⁷ to 1.0x10¹⁰ Nm/rad, and optionally may be in the range from 9x10⁷ to 4x10⁸ Nm/rad (and optionally may be equal to 1.8x10⁸ Nm/rad).

In various embodiments, the effective linear torsional stiffness of the gearbox support 40 is greater than 7.1x10⁸ N/m, and optionally greater than 8.4x10⁸ N/m. In some embodiments, for example in embodiments in which the fan diameter is in the range from 240 to 280 cm the effective linear torsional stiffness of the gearbox support 40 may be greater than 71x10⁸ N/m, and optionally may be greater than 8x10⁸ N/m (and optionally may be equal to 9.2x10⁸ N/m). In some embodiments, for example in embodiments in which the fan diameter is in the range from 330 to 380 cm, the effective linear torsional stiffness of the gearbox support 40 may be greater than 9.0x10⁸ N/m, and optionally may be greater than 9.6x10⁸ N/m (and optionally may be equal to 1.2x10⁹ N/m).

In various embodiments, the effective linear torsional stiffness of the gearbox support 40 is in the range from 7.1x10⁸ to 6.0x10¹⁰ N/m, and optionally in the range from 8.4x10⁸ to 3.0x10¹⁰ N/m. In some embodiments, for example in embodiments in which the fan diameter is in the range from 240 to 280 cm the effective linear torsional stiffness of the gearbox support 40 may be in the range from 7.1x10⁸ to 5.0x10¹⁰ N/m, and optionally may be in the range from 8x10⁸ to 1x10⁹ N/m (and optionally may be equal to 9.2x10⁸ N/m). In some embodiments, for example in embodiments in which the fan diameter is in the range from 330 to 380 cm, the effective linear torsional stiffness of the gearbox support 40 may be in the range from 9.0x10⁸ to 6.0x10¹⁰ N/m, and optionally may be in the range from 9.0x10⁸ to 2.0x10⁹ N/m (and optionally may be equal to 1.2x10⁹ N/m).

The skilled person would appreciate that the stiffness of the gearbox support 40 may be defined in the same way for embodiments with different epicyclic gearboxes, e.g. planetary gearboxes.

One or more of gearbox support 40 geometry, materials, and connection type for the connection to the stationary support structure 24 may be selected or adjusted as appropriate to obtain the desired stiffness.

The inventor has discovered that particular ratios of the parameters defined above have significant impact on gearbox performance. In particular, one, some or all of the below may apply to any embodiment:
In various embodiments, a radial to torsional carrier stiffness ratio of: $\frac{the radial bending stiffness of the planet carrier \left(34\right)}{the effective linear torsional stiffness of the planet carrier \left(34\right)}$ is greater than or equal to 0.030, and optionally in the range from 0.030 to 2.0.

In various embodiments, the radial to torsional carrier stiffness ratio is in the range from 3.0x10⁻² to 2.0x10⁰ (i.e. from 0.030 to 2.0), and optionally in the range from 6.0x10⁻² to 1.0. In some embodiments, the radial to torsional carrier stiffness ratio may be in the range from 6.0x10⁻² to 3.0x10⁻¹, and optionally may be in the range from 0.18 to 0.19 (and optionally may be equal to 0.18). In some embodiments, the radial to torsional carrier stiffness ratio may be in the range from 0.30 to 2.0. In alternative such embodiments, the radial to torsional carrier stiffness ratio may be in the range from 0.14 to 0.8, and optionally may be in the range from 0.14 to 0.19 (and optionally may be equal to 0.14).

In various embodiments, a product of the components of the radial to torsional carrier stiffness ratio, i.e. the radial bending stiffness of the planet carrier 34 multiplied by the effective linear torsional stiffness of the planet carrier 34, may be calculated. The value of this product, in various embodiments, may be greater than or equal to 5.0x10¹⁸ N²m⁻², and optionally less than 1.3x10²⁴ N²m⁻², and optionally may be greater than or equal to 1.6x10¹⁹ N²m⁻², and optionally less than 1.3x10²² N²m⁻². In some embodiments, for example in embodiments in which the fan diameter is in the range from 240 to 280 cm, the product value may be greater than or equal to 1.6x10¹⁹ N²m⁻², and optionally less than 1.3 x10²² N²m⁻². In some embodiments, for example in embodiments in which the fan diameter is in the range from 330 to 380 cm, the product value may be greater than or equal to 3.0x10¹⁹ N²m⁻², and optionally less than 1.3 x10²³ N²m⁻².

In various embodiments, a tilt to torsional carrier stiffness ratio of: $\frac{the tilt stiffness of the planet carrier \left(34\right)}{the torsional stiffness of the planet carrier \left(34\right)}$ is less than or equal to 20, and optionally less than or equal to 7.3.

In various embodiments, the tilt to torsional carrier stiffness ratio is in the range from 7.00x10⁻¹ to 2.0x10¹ (i.e. from 0.7 to 20), and optionally in the range from 0.7 to 7.3. In some embodiments, for example in embodiments in which the fan diameter is in the range from 240 to 280 cm the tilt to torsional carrier stiffness ratio may be less than or equal to 8.0, optionally in the range from 2.5 to 8.0, and further optionally may be in the range from 4 to 7 (and optionally may be equal to 5.60). In some embodiments, for example in embodiments in which the fan diameter is in the range from 330 to 380 cm, the tilt to torsional carrier stiffness ratio may be less than or equal to 7.9, optionally in the range from 1.5 to 7.9, and further optionally may be in the range from 1.8 to 5.2 (and optionally may be equal to 2.63).

In various embodiments, a product of the components of the tilt to torsional carrier stiffness ratio, i.e. the tilt stiffness of the planet carrier (34) multiplied by the torsional stiffness of the planet carrier (34), may be calculated. The value of this product, in various embodiments, may be greater than or equal to 1.0x10¹⁷ N²m²rad⁻², and optionally less than 2.8x10²² N²m²rad⁻², and optionally may be greater than or equal to 5.1x10¹⁷ N²m²rad⁻² , and optionally less than 3.0x10²¹ N²m²rad⁻². In some embodiments, for example in embodiments in which the fan diameter is in the range from 240 to 280 cm, the product value may be greater than or equal to 5.1 x10¹⁷ N²m²rad⁻², and optionally less than 3.0 x10²⁰ N²m²rad⁻². In some embodiments, for example in embodiments in which the fan diameter is in the range from 330 to 380 cm, the product value may be greater than or equal to 1.0 x10¹⁸ N²m²rad⁻², and optionally less than 3.1 x10²¹ N²m²rad⁻².

In various embodiments, a carrier to gearbox input shaft torsional stiffness ratio of: $\frac{the torsional stiffness of the planet carrier \left(34\right)}{the torsional stiffness of the gearbox input shaft \left(26a\right)}$ is greater than or equal to 7.0x10¹.

In various embodiments, the carrier to gearbox input shaft torsional stiffness ratio may be greater than or equal to 7.5x10¹. In some embodiments, for example in embodiments in which the fan diameter is in the range from 240 to 280 cm the carrier to gearbox input shaft torsional stiffness ratio may greater than or equal to 7.3x10¹, and optionally may be greater than or equal to 9.5x10¹ or 14.0x10¹ (and optionally may be equal to 152). In some embodiments, for example in embodiments in which the fan diameter is in the range from 330 to 380 cm, the carrier to gearbox input shaft torsional stiffness ratio may be greater than or equal to 1.0x10², and optionally may be greater than or equal to 1.5x10⁷ (and optionally may be equal to 2.0x10²). In various embodiments, the carrier to gearbox input shaft torsional stiffness ratio may be greater than or equal to 1.4x10², and optionally in the range from 1.4x10² and to 5.4 x10².

In various embodiments, the carrier to gearbox input shaft torsional stiffness ratio may be in the range from 7x10¹ to 5x10³ (i.e. 70 to 5000), and optionally from 7.5x10¹ to 3.0x10³. In some embodiments, for example in embodiments in which the fan diameter is in the range from 240 to 280 cm the carrier to gearbox input shaft torsional stiffness ratio may be in the range from 7.3x10¹ to 1.0x10³, and optionally may be in the range from 9.5x10¹ or 14.0x10¹ to 3.0x10² (and optionally may be equal to 152). In some embodiments, for example in embodiments in which the fan diameter is in the range from 330 to 380 cm, the carrier to gearbox input shaft torsional stiffness ratio may be in the range from 1.0x10² to 5.0x10³, and optionally may be in the range from 1.5x10² to 2.7x10² (and optionally may be equal to 2.0x10²).

In various embodiments, a product of the components of the carrier to gearbox input shaft torsional stiffness ratio, i.e. the torsional stiffness of the planet carrier (34) multiplied by the torsional stiffness of the gearbox input shaft (26a), may be calculated. The value of this product, in various embodiments, may be greater than or equal to 1.5x10¹⁴ N²m²rad⁻², and optionally less than 1.0x10¹⁷ N²m²rad⁻², and optionally may be greater than or equal to 2.2x10¹⁴ N²m²rad⁻², and optionally less than 5.0x10¹⁶ N²m²rad⁻². In some embodiments, for example in embodiments in which the fan diameter is in the range from 240 to 280 cm, the product value may be greater than or equal to 1.5 x10¹⁴ N²m²rad⁻², and optionally less than 1.0 x10¹⁶ N²m²rad⁻². In some embodiments, for example in embodiments in which the fan diameter is in the range from 330 to 380 cm, the product value may be greater than or equal to 3.0 x10¹⁵ N²m²rad⁻², and optionally less than 1.0 x10¹⁷ N²m²rad⁻².

In various embodiments, a carrier to gearbox support torsional stiffness ratio of: $\frac{the torsional stiffness of the planet carrier \left(34\right)}{the torsional stiffness of the gearbox support \left(40\right)}$ is greater than or equal to 2.3.

In various embodiments, the carrier to gearbox support torsional stiffness ratio may be greater than or equal to 2.3, and optionally greater than or equal to 2.6. In some embodiments, for example in embodiments in which the fan diameter is in the range from 240 to 280 cm carrier to gearbox support torsional stiffness ratio may be greater than or equal to 2.3, and optionally may be greater than or equal to 2.5 (and optionally may be equal to 4.8). In some embodiments, for example in embodiments in which the fan diameter is in the range from 330 to 380 cm, the carrier to gearbox support torsional stiffness ratio may be greater than or equal to 3.5, and optionally may be greater than or equal to 4 (and optionally may be equal to 6.5). In various embodiments, the carrier to gearbox support torsional stiffness ratio may be greater than or equal to 4.4, and optionally in the range from 4.4 or 4.5 to 15.5.

In various embodiments, the carrier to gearbox support torsional stiffness ratio may be in the range from 2.3x10° to 3.0x10² (i.e. 2.3 to 300), and optionally from 2.6 to 50. In some embodiments, for example in embodiments in which the fan diameter is in the range from 240 to 280 cm, the carrier to gearbox support torsional stiffness ratio may be in the range from 2.3 to 30, and optionally may be in the range from 2.5 to 5.5 or from 4.3 to 5.5 (and optionally may be equal to 4.8). In some embodiments, for example in embodiments in which the fan diameter is in the range from 330 to 380 cm, the carrier to gearbox support torsional stiffness ratio may be in the range from 3.5 to 300, and optionally may be in the range from 4 to 15 (and optionally may be equal to 6.5).

In various embodiments, a product of the components of the carrier to gearbox support torsional stiffness ratio i.e. the torsional stiffness of the planet carrier 34 multiplied by the torsional stiffness of the gearbox support 40, may be calculated. The value of this product, in various embodiments, may be greater than or equal to 5.0x10¹⁵ N²m²rad⁻², and optionally less than 1.0x10¹⁹ N²m²rad⁻², and optionally may be greater than or equal to 8.0x10¹⁵ N²m²rad⁻², and optionally less than 2.0x10¹⁸ N²m²rad⁻². In some embodiments, for example in embodiments in which the fan diameter is in the range from 240 to 280 cm, the product value may be greater than or equal to 5.0 x10¹⁵ N²m²rad⁻², and optionally less than to 1.2 x10¹⁷ N²m²rad⁻². In some embodiments, for example in embodiments in which the fan diameter is in the range from 330 to 380 cm, the product value may be greater than or equal to 1.0x10¹⁷ N²m²rad⁻², and optionally less than 1.0 x10¹⁹ N²m²rad⁻².

In various embodiments, a carrier to fan shaft stiffness ratio of: $\frac{the torsional stiffness of the planet carrier \left(34\right)}{the torsional stiffness of the fan shaft \left(36\right)}$ is greater than or equal to 8.

In various embodiments, the carrier to fan shaft stiffness ratio may be greater than or equal to 8.0x10⁰ (i.e. 8.0), and optionally greater than or equal to 9. In some embodiments, for example in embodiments in which the fan diameter is in the range from 240 to 280 cm, the carrier to fan shaft stiffness ratio may be greater than or equal to 8, and optionally may be greater than or equal to 9 or 15.1 (and optionally may be equal to 16.6). In some embodiments, for example in embodiments in which the fan diameter is in the range from 330 to 380 cm, the carrier to fan shaft stiffness ratio may be greater than or equal to 12, and optionally may be greater than or equal to 15 or 18 (and optionally may be equal to 22.2). In various embodiments, the carrier to fan shaft stiffness ratio may be greater than or equal to 1.50x10¹, and optionally greater than or equal to 1.6x10¹; the carrier to fan shaft stiffness ratio may be smaller than 8.4x10¹ in such embodiments.

In various embodiments, the carrier to fan shaft stiffness ratio may be in the range from 8.0x10⁰ to 1.1x10³ (i.e. 8.0 to 1100), and optionally from 9 to 1.9x10². In some embodiments, for example in embodiments in which the fan diameter is in the range from 240 to 280 cm, the carrier to fan shaft stiffness ratio may be in the range from 8 to 5.0x10², and optionally may be in the range from 9 to 40 or from 15 or 16 to 40 (and optionally may be equal to 17). In some embodiments, for example in embodiments in which the fan diameter is in the range from 330 to 380 cm, the carrier to fan shaft stiffness ratio may be in the range from 12 to 1.1x10³, and optionally may be in the range from 15 or 18 to 55 (and optionally may be equal to 22).

In various embodiments, a product of the components of the carrier to fan shaft stiffness ratio i.e. the torsional stiffness of the planet carrier 34 multiplied by the torsional stiffness of the fan shaft 36, may be calculated. The value of this product, in various embodiments, may be greater than or equal to 1.5x10¹⁵ N²m²rad⁻², and optionally less than 3.0x10¹⁸ N²m²rad⁻², and optionally may be greater than or equal to 2.0x10¹⁵ N²m²rad⁻², and optionally less than 7.0x10¹⁷ N²m²rad⁻². In some embodiments, for example in embodiments in which the fan diameter is in the range from 240 to 280 cm, the product value may be greater than or equal to 1.5 x10¹⁵ N²m²rad⁻², and optionally less than to 1.5 x10¹⁷ N²m²rad⁻². In some embodiments, for example in embodiments in which the fan diameter is in the range from 330 to 380 cm, the product value may be greater than or equal to 9.0 x10¹⁵ N²m²rad⁻², and optionally less than 3.0 x10¹⁸ N²m²rad⁻².

In various embodiments, a first carrier to pin stiffness ratio of: $\frac{the effective linear torsional stiffness of the planet carrier \left(34\right)}{the radial bending stiffness of each pin \left(33\right)}$ is greater than or equal to 10, and optionally greater than or equal to 15. In some embodiments, for example in embodiments in which the fan diameter is in the range from 240 to 280 cm, the first carrier to pin stiffness ratio shaft may be greater than or equal to 1.5x10¹, and optionally may be equal to 16.3. In some embodiments, for example in embodiments in which the fan diameter is in the range from 330 to 380 cm, the first carrier to pin stiffness ratio may be greater than or equal to 1.6x10¹ and optionally may be greater than or equal to 16.5 (and optionally may be equal to 18.7).

In various embodiments, the first carrier to pin stiffness ratio is in the range from 1.0x10¹ to 4.0x10¹ (i.e. from 10 to 40), and optionally in the range from 1.5x10¹ to 3.0x10¹. In some embodiments, for example in embodiments in which the fan diameter is in the range from 240 to 280 cm, the first carrier to pin stiffness ratio shaft may be in the range from 1.5x10¹ to 2.5x10¹, and optionally may be in the range from 15 to 19 (and optionally may be equal to 16.3). In some embodiments, for example in embodiments in which the fan diameter is in the range from 330 to 380 cm, the first carrier to pin stiffness ratio may be in the range from 1.6x10¹ to 3.5x10¹ and optionally may be in the range from 16 or 16.5 to 20 (and optionally may be equal to 18.7).

The product of the effective linear torsional stiffness of the planet carrier 34 and the radial bending stiffness of each pin 33 may be greater than or equal to 2.1x10¹⁸ N²m⁻², and optionally greater than or equal to 5.8x10¹⁸ N²m⁻². In some embodiments, for example in embodiments in which the fan diameter is in the range from 240 to 280 cm, the product of the effective linear torsional stiffness of the planet carrier 34 and the radial bending stiffness of each pin 33 may be greater than or equal to 5.3x10¹⁸ N²m⁻². In some embodiments, for example in embodiments in which the fan diameter is in the range from 330 to 380 cm, the product of the effective linear torsional stiffness of the planet carrier 34 and the radial bending stiffness of each pin 33 may be greater than or equal to 1.2x10¹⁹ N²m⁻².

The product of the effective linear torsional stiffness of the planet carrier 34 and the radial bending stiffness of each pin 33 may be in the range from 2.1x10¹⁸ to 3.6x10²⁰ N²m⁻², and optionally in the range from 5.8x10¹⁸ to 1.7x10²⁰ N²m⁻². In some embodiments, for example in embodiments in which the fan diameter is in the range from 240 to 280 cm, the product of the effective linear torsional stiffness of the planet carrier 34 and the radial bending stiffness of each pin 33 may be in the range from 5.3x10¹⁸ to 4.0x10¹⁹ N²m⁻². In some embodiments, for example in embodiments in which the fan diameter is in the range from 330 to 380 cm, the product of the effective linear torsional stiffness of the planet carrier 34 and the radial bending stiffness of each pin 33 may be in the range from 1.2x10¹⁹ to 1.7x10²⁰ N²m⁻².

In various embodiments, a second carrier to pin stiffness ratio of: $\frac{the torsional stiffness of the planet carrier \left(34\right)}{the tilt stiffness of each pin \left(33\right)}$ is greater than or equal to 2.4x10¹, and optionally greater than or equal to 3.4x10¹. In some embodiments, for example in embodiments in which the fan diameter is in the range from 240 to 280 cm, the second carrier to pin stiffness ratio may be greater than or equal to 3.4x10¹, optionally greater than or equal to 36, and optionally may be equal to 47.5. In some embodiments, for example in embodiments in which the fan diameter is in the range from 330 to 380 cm, the second carrier to pin stiffness ratio may be greater than or equal to 4.0x10¹ and optionally may be greater than or equal to 45 (and optionally may be equal to 69.1).

In various embodiments, the second carrier to pin stiffness ratio is in the range from 2.4x10¹ to 1.8x10¹ (i.e. from 24 to 180), and optionally in the range from 3.4x10¹ to 1.4x10². In some embodiments, for example in embodiments in which the fan diameter is in the range from 240 to 280 cm, the second carrier to pin stiffness ratio shaft may be in the range from 3.4x10¹ to 1.2x10², and optionally may be in the range from 36 to 58 (and optionally may be equal to 47.5). In some embodiments, for example in embodiments in which the fan diameter is in the range from 330 to 380 cm, the second carrier to pin stiffness ratio may be in the range from 4.0x10¹ to 1.8x10² and optionally may be in the range from 45 to 95 (and optionally may be equal to 69.1).

The product of the torsional stiffness of the planet carrier 34 and the tilt stiffness of each pin 33 may be greater than or equal to 1.0x10¹⁵ N²m²rad⁻², and optionally greater than or equal to 2.5x10¹⁵ N²m²rad⁻². In some embodiments, for example in embodiments in which the fan diameter is in the range from 240 to 280 cm, the product of the torsional stiffness of the planet carrier 34 and the tilt stiffness of each pin 33 may be greater than or equal to 2.5x10¹⁵ N²m²rad⁻². In some embodiments, for example in embodiments in which the fan diameter is in the range from 330 to 380 cm, the product of the torsional stiffness of the planet carrier 34 and the tilt stiffness of each pin 33 may be greater than or equal to 1.4x10¹⁶ N²m²rad⁻².

The product of the torsional stiffness of the planet carrier 34 and the tilt stiffness of each pin 33 may be in the range from 1.0x10¹⁵ to 4.7x10¹⁷ N²m²rad⁻², and optionally in the range from 2.5x10¹⁵ to 2.0x10¹⁷ N²m²rad⁻². In some embodiments, for example in embodiments in which the fan diameter is in the range from 240 to 280 cm, the product of the torsional stiffness of the planet carrier 34 and the tilt stiffness of each pin 33 may be in the range from 2.5x10¹⁵ to 3.0x10¹⁶ N²m²rad⁻². In some embodiments, for example in embodiments in which the fan diameter is in the range from 330 to 380 cm, the torsional stiffness of the planet carrier 34 and the tilt stiffness of each pin 33 may be in the range from 1.4x10¹⁶ to 4.7x10¹⁷ N²m²rad⁻².

Figure 26 illustrates how the stiffnesses defined herein may be measured. Figure 26 shows a plot of the displacement δ resulting from the application of a load L (e.g. a force, moment or torque) applied to a component for which the stiffness is being measured. At levels of load from zero to L_{P} there is a non-linear region in which displacement is caused by motion of the component (or relative motion of separate parts of the component) as it is loaded, rather than deformation of the component; for example moving within clearance between parts. At levels of load above L_{Q} the elastic limit of the component has been exceeded and the applied load no longer causes elastic deformation - plastic deformation or failure of the component may occur instead. Between points P and Q the applied load and resulting displacement have a linear relationship. The stiffnesses defined herein may be determined by measuring the gradient of the linear region between points P and Q (with the stiffness being the inverse of that gradient). The gradient may be found for as large a region of the linear region as possible to increase the accuracy of the measurement by providing a larger displacement to measure. For example, the gradient may be found by applying a load equal to or just greater than L_{P} and equal to or just less than L_{Q}. Values for L_{P} and L_{Q} may be estimated prior to testing based on materials characteristics so as to apply suitable loads. Although the displacement is referred to as δ in this description, the skilled person would appreciate that equivalent principles would apply to a linear or angular displacement.

The stiffnesses defined herein, unless otherwise stated, are for the corresponding component(s) when the engine is off (i.e. at zero speed/on the bench). The stiffnesses generally do not vary significantly over the operating range of the engine; the stiffness at cruise conditions of the aircraft to which the engine is used (those cruise conditions being as defined elsewhere herein) may therefore be the same as for when the engine is not in use. However, where the stiffness varies over the operating range of the engine, the stiffnesses defined herein are to be understood as being values for when the engine is at room temperature and unmoving.

The present disclosure also relates to methods 1300 of operating a gas turbine engine 10 on an aircraft, although such a method is not the subject of the claims. The methods 1300 are illustrated in Figure 27. The method 1300 comprises starting up and operating 1302 the engine 10 (e.g taxiing on a runway, take-off, and climb of the aircraft, as suitable) to reach cruise conditions.

Once cruise conditions have been reached, the method 1300 then comprises operating 1304 the gas turbine engine 10, which may be as described in one or more embodiments elsewhere herein, to provide propulsion under cruise conditions.

The gas turbine engine 10 is such that, and/or is operated such that, any or all of the parameters or ratios defined herein are within the specified ranges.

The torque on the core shaft 26 may be referred to as the input torque, as this is the torque which is input to the gearbox 30. Torque has units of [force]x[distance] and may be expressed in units of Newton metres (N.m), and is defined in the usual way as would be understood by the skilled person.

The torque supplied by the turbine 19 to the core shaft (i.e. the torque on the core shaft) at cruise conditions may be greater than or equal to 10,000 Nm, and optionally greater than or equal to 11,000 Nm. In some embodiments, for example in embodiments in which the fan diameter is in the range from 240 to 280 cm, the torque on the core shaft 26 at cruise conditions may be greater than or equal to 10,000 Nm (and optionally may be equal to 12,760 Nm). In some embodiments, for example in embodiments in which the fan diameter is in the range from 330 to 380 cm, the torque on the core shaft 26 at cruise conditions may be greater than or equal to 25,000 Nm, and optionally greater than or equal to 30,000 Nm (and optionally may be equal to 33,970 Nm, or 34,000 Nm).

The torque on the core shaft at cruise conditions may be in the range from 10,000 to 50,000 Nm, and optionally from 11,000 to 45,000 Nm. In some embodiments, for example in embodiments in which the fan diameter is in the range from 240 to 280 cm, the torque on the core shaft 26 at cruise conditions may be in the range from 10,000 to 15,000 Nm, and optionally from 11,000 to 14,000 Nm (and optionally may be equal to 12,760 Nm). In some embodiments, for example in embodiments in which the fan diameter is in the range from 330 to 380 cm, the torque on the core shaft 26 at cruise conditions may be in the range from 25,000 Nm or 50,000 Nm, and optionally from 30,000 to 40,000 Nm (and optionally may be equal to 33,970 Nm, or 34,000 Nm).

Under maximum take-off (MTO) conditions, the torque on the core shaft 26 may be greater than or equal to 28,000 Nm, and optionally greater than or equal to 30,000 Nm. In some embodiments, for example in embodiments in which the fan diameter is in the range from 240 to 280 cm, the torque on the core shaft 26 under MTO conditions may be greater than or equal to 28,000, and optionally greater than or equal to 35,000 Nm (and optionally may be equal to 36,300 Nm). In some embodiments, for example in embodiments in which the fan diameter is in the range from 330 to 380 cm, the torque on the core shaft 26 under MTO conditions may greater than or equal to 70,000 Nm, and optionally greater than or equal to 80,000 or 82,000 Nm (and optionally may be equal to 87,000 Nm or 87,100 Nm).

Under maximum take-off (MTO) conditions, the torque on the core shaft 26 may be in the range from 28,000 Nm to 135,000 Nm, and optionally in the range from 30,000 to 110,000 Nm. In some embodiments, for example in embodiments in which the fan diameter is in the range from 240 to 280 cm, the torque on the core shaft 26 under MTO conditions may be in the range from 28,000 to 50,000 Nm, and optionally from 35,000 to 38,000 Nm (and optionally may be equal to 36,000 Nm or 36,300 Nm). In some embodiments, for example in embodiments in which the fan diameter is in the range from 330 to 380 cm, the torque on the core shaft 26 under MTO conditions may be in the range from 70,000 Nm or 135,000 Nm, and optionally from 80,000 to 90,000 Nm or 82,000 to 92,000 Nm (and optionally may be equal to 87,000 Nm or 87,100 Nm).

## Claims

1. A gas turbine engine (10) for an aircraft comprising:
an engine core (11) comprising a turbine (19), a compressor (14), and a core shaft (26) connecting the turbine to the compressor;
a fan (23) located upstream of the engine core, the fan comprising a plurality of fan blades; and
a gearbox (30) arranged to receive an input from the core shaft (26) and to output drive to the fan (23) so as to drive the fan at a lower rotational speed than the core shaft, the gearbox (30) being an epicyclic gearbox comprising a sun gear (28), a plurality of planet gears (32), a ring gear (38), and a planet carrier (34) on which the planet gears (32) are mounted,
and **characterized in that**:
the radial bending stiffness of the planet carrier (34) is in the range from 2.0x10⁹ to 1.5x10¹¹N/m; and/or
the tilt stiffness of the planet carrier (34) is in the range from 1.3 x10⁹ to 1.2x10¹¹ Nm/radian.

2. The gas turbine engine (10) of claim 1, wherein the fan (23) has a fan diameter in the range from 240 to 280 cm and the radial bending stiffness of the planet carrier (34) is less than or equal to 5x10¹⁰ N/m.

3. The gas turbine engine (10) according to claim 1, wherein:
(i) the fan (23) has a fan diameter in the range from 240 to 280 cm and the tilt stiffness of the planet carrier (34) is greater than or equal to 2.2 x10⁹ Nm/radian; or
(ii) the fan (23) has a fan diameter in the range from 330 to 380 cm and the tilt stiffness of the planet carrier (34) is greater than or equal to 2.3 x10⁹ Nm/radian.

4. The gas turbine engine (10) of any preceding claim wherein the torsional stiffness of the planet carrier (34) is greater than or equal to 1.60x10⁸ Nm/rad, and optionally in the range from 1.60x10⁸ to 1.00x10¹¹ Nm/rad, or from 2.7x10⁸ to 1x10¹⁰ Nm/rad.

5. The gas turbine engine (10) according to any preceding claim, wherein the planet carrier (34) comprises a forward plate (34a) and a rearward plate (34b) and pins (33) extending therebetween, each pin (33) being arranged to have a planet gear (32) mounted thereon, and wherein optionally the planet carrier (34) further comprises lugs (34c) extending between the forward and rearward plates (34a, 34b), the lugs (34c) being arranged to pass between adjacent planet gears (32).

6. The gas turbine engine (10) according to any preceding claim, wherein a pitch circle diameter of pins (33) on which the planet gears (32) are mounted is in the range from 0.38 to 0.65 m, and optionally equal to 0.4 m or 0.55 m.

7. The gas turbine engine (10) according to any preceding claim, wherein the gearbox (30) comprises an odd number of planet gears (32), and optionally comprises 3, 5 or 7 planet gears (32).

8. The gas turbine engine (10) according to any preceding claim, wherein:
the turbine is a first turbine (19), the compressor is a first compressor (14), and the core shaft is a first core shaft (26);
the engine core further comprises a second turbine (17), a second compressor (15), and a second core shaft (27) connecting the second turbine to the second compressor; and
the second turbine, second compressor, and second core shaft are arranged to rotate at a higher rotational speed than the first core shaft.

9. The gas turbine engine (10) according to claim 1, wherein the fan (23) has a fan diameter greater than 240 cm and less than or equal to 380 cm, and optionally greater than 300 cm and less than or equal to 380 cm.

10. The gas turbine engine (10) of any preceding claim, wherein a gear ratio of the gearbox (30) is in the range from 3.2 to 4.5, and optionally from 3.3 to 4.0.

## Patentansprüche

1. Gasturbinentriebwerk (10) für ein Luftfahrzeug, umfassend:
einen Triebwerkskern (11), der eine Turbine (19), einen Verdichter (14) und eine Kernwelle (26) umfasst, die die Turbine mit dem Verdichter verbindet;
einen Fan (23), der sich stromaufwärts des Triebwerkskerns befindet, wobei der Fan eine Vielzahl von Fanlaufschaufeln umfasst; und
ein Getriebe (30), das dazu angeordnet ist, eine Eingabe von der Kernwelle (26) aufzunehmen und Antrieb an den Fan (23) auszugeben, um den Fan mit einer niedrigeren Drehzahl als die Kernwelle anzutreiben, wobei das Getriebe (30) ein Planetengetriebe ist, das ein Sonnenrad (28), eine Vielzahl von Planetenrädern (32), ein Hohlrad (38) und einen Planetenträger (34) umfasst, an dem die Planetenräder (32) montiert sind,
und **dadurch gekennzeichnet, dass**:
die radiale Biegesteifigkeit des Planetenträgers (34) im Bereich von 2,0x10⁹ bis 1,5x10¹¹ N/m liegt; und/oder
die Kippsteifigkeit des Planetenträgers (34) im Bereich von 1,3 x10⁹ bis 1,2x10¹¹ Nm/Radiant liegt.

2. Gasturbinentriebwerk (10) nach Anspruch 1, wobei der Fan (23) einen Fandurchmesser im Bereich von 240 bis 280 cm aufweist und die radiale Biegesteifigkeit des Planetenträgers (34) kleiner oder gleich 5x10¹⁰ N/m ist.

3. Gasturbinentriebwerk (10) gemäß Anspruch 1, wobei:
(i) der Fan (23) einen Fandurchmesser im Bereich von 240 bis 280 cm aufweist und die Kippsteifigkeit des Planetenträgers (34) größer oder gleich 2,2 x10⁹ Nm/Radiant ist; oder
(ii) der Fan (23) einen Fandurchmesser im Bereich von 330 bis 380 cm aufweist und die Kippsteifigkeit des Planetenträgers (34) größer oder gleich 2,3 x10⁹ Nm/Radiant ist.

4. Gasturbinentriebwerk (10) nach einem vorhergehenden Anspruch, wobei die Torsionssteifigkeit des Planetenträgers (34) größer oder gleich 1,60x10⁸ Nm/rad und optional im Bereich von 1,60x10⁸ bis 1,00x10¹¹ Nm/rad oder von 2,7x10⁸ bis 1x10¹⁰ Nm/rad ist.

5. Gasturbinentriebwerk (10) gemäß einem vorhergehenden Anspruch, wobei der Planetenträger (34) eine vordere Platte (34a) und eine hintere Platte (34b) und Stifte (33), die sich dazwischen erstrecken, umfasst, wobei jeder Stift (33) so angeordnet ist, dass er ein darauf montiertes Planetenrad (32) aufweist, und wobei der Planetenträger (34) optional ferner Vorsprünge (34c) umfasst, die sich zwischen der vorderen und der hinteren Platte (34a, 34b) erstrecken, wobei die Vorsprünge (34c) angeordnet sind, um zwischen benachbarten Planetenrädern (32) hindurchzugehen.

6. Gasturbinentriebwerk (10) gemäß einem vorhergehenden Anspruch, wobei ein Teilkreisdurchmesser der Stifte (33), auf denen die Planetenräder (32) montiert sind, im Bereich von 0,38 bis 0,65 m und optional gleich 0,4 m oder 0,55 m ist.

7. Gasturbinentriebwerk (10) gemäß einem vorhergehenden Anspruch, wobei das Getriebe (30) eine ungerade Anzahl von Planetenrädern (32) umfasst und optional 3, 5 oder 7 Planetenräder (32) umfasst.

8. Gasturbinentriebwerk (10) gemäß einem vorhergehenden Anspruch, wobei:
die Turbine eine erste Turbine (19) ist, der Verdichter ein erster Verdichter (14) ist und die Kernwelle eine erste Kernwelle (26) ist;
der Triebwerkskern ferner eine zweite Turbine (17), einen zweiten Verdichter (15) und eine zweite Kernwelle (27) umfasst, die die zweite Turbine mit dem zweiten Verdichter verbindet; und
die zweite Turbine, der zweite Verdichter und die zweite Kernwelle so angeordnet sind, dass sie sich mit einer höheren Drehzahl als die erste Kernwelle drehen.

9. Gasturbinentriebwerk (10) gemäß Anspruch 1, wobei der Fan (23) einen Fandurchmesser aufweist, der größer als 240 cm und kleiner als oder gleich 380 cm und optional größer als 300 cm und kleiner als oder gleich 380 cm ist.

10. Gasturbinentriebwerk (10) nach einem vorhergehenden Anspruch, wobei ein Übersetzungsverhältnis des Getriebes (30) im Bereich von 3,2 bis 4,5 und optional von 3,3 bis 4,0 liegt.

## Revendications

1. Moteur à turbine à gaz (10) pour un aéronef comprenant :
un cœur de moteur (11) comprenant une turbine (19), un compresseur (14) et un arbre de cœur (26) reliant la turbine au compresseur ;
une soufflante (23) située en amont du cœur de moteur, la soufflante comprenant une pluralité de pales de soufflante ; et
un réducteur (30) agencé pour recevoir un entraînement en entrée provenant de l'arbre de cœur (26) et pour délivrer un entraînement en sortie à la soufflante (23) de façon à entraîner la soufflante à une vitesse de rotation inférieure à celle de l'arbre de cœur, le réducteur (30) étant un réducteur à train épicycloïdal comprenant un pignon solaire (28), une pluralité de satellites (32), une couronne (38) et un porte-satellites (34) sur lequel les satellites (32) sont montés,
et **caractérisé en ce que** :
la rigidité en flexion radiale du porte-satellites (34) est comprise dans la plage de 2,0 x 10⁹ à 1,5 x 10¹¹ N/m ; et/ou
la rigidité au basculement du porte-satellites (34) est comprise dans la plage de 1,3 x 10⁹ à 1,2 x 10¹¹ Nm/radian.

2. Moteur à turbine à gaz (10) de la revendication 1, dans lequel la soufflante (23) présente un diamètre de soufflante compris dans la plage de 240 à 280 cm et la rigidité en flexion radiale du porte-satellites (34) est inférieure ou égale à 5 x 10¹⁰ N/m.

3. Moteur à turbine à gaz (10) selon la revendication 1, dans lequel :
(i) la soufflante (23) présente un diamètre de soufflante compris dans la plage de 240 à 280 cm et la rigidité au basculement du porte-satellites (34) est supérieure ou égale à 2,2 x 10⁹ Nm/radian ; ou
(ii) la soufflante (23) présente un diamètre de soufflante compris dans la plage de 330 à 380 cm et la rigidité au basculement du porte-satellites (34) est supérieure ou égale à 2,3 x 10⁹ Nm/radian.

4. Moteur à turbine à gaz (10) de l'une quelconque des revendications précédentes, dans lequel la rigidité en torsion du porte-satellites (34) est supérieure ou égale à 1,60 x 10⁸ Nm/rad, et éventuellement comprise dans la plage de 1,60 x 10⁸ à 1,00 x 10¹¹ Nm/rad, ou de 2,7 x 10⁸ à 1 x 10¹⁰ Nm/rad.

5. Moteur à turbine à gaz (10) selon une quelconque revendication précédente, dans lequel le porte-satellites (34) comprend une plaque avant (34a) et une plaque arrière (34b) et des broches (33) s'étendant entre elles, chaque broche (33) étant agencée pour avoir un satellite (32) monté sur celle-ci, et dans lequel éventuellement le porte-satellites (34) comprend en outre des pattes (34c) s'étendant entre les plaques avant et arrière (34a, 34b), les pattes (34c) étant agencées pour passer entre des satellites adjacents (32).

6. Moteur à turbine à gaz (10) selon l'une quelconque des revendications précédentes, dans lequel un diamètre de cercle primitif des broches (33) sur lesquelles les satellites (32) sont montés est compris entre 0,38 et 0,65 m, et éventuellement égal à 0,4 m ou 0,55 m.

7. Moteur à turbine à gaz (10) selon l'une quelconque des revendications précédentes, dans lequel le réducteur (30) comprend un nombre impair de satellites (32) et comprend éventuellement 3, 5 ou 7 satellites (32).

8. Moteur à turbine à gaz (10) selon l'une quelconque des revendications précédentes, dans lequel :
la turbine est une première turbine (19), le compresseur est un premier compresseur (14) et l'arbre de cœur est un premier arbre de cœur (26) ;
le cœur de moteur comprend en outre une seconde turbine (17), un second compresseur (15) et un second arbre de cœur (27) reliant la seconde turbine au second compresseur ; et
la seconde turbine, le second compresseur et le second arbre de cœur sont agencés pour tourner à une vitesse de rotation plus élevée que le premier arbre de cœur.

9. Moteur à turbine à gaz (10) selon la revendication 1, dans lequel la soufflante (23) présente un diamètre de soufflante supérieur à 240 cm et inférieur ou égal à 380 cm et éventuellement supérieur à 300 cm et inférieur ou égal à 380 cm.

10. Moteur à turbine à gaz (10) de l'une quelconque des revendications précédentes, dans lequel un rapport de démultiplication du réducteur (30) est compris entre 3,2 et 4,5 et éventuellement entre 3,3 et 4,0.
